# EUROPÄISCHE PATENTSCHRIFT

(11) **EP 4 077 991 B1**
(45) Veröffentlichungstag und Bekanntmachung des Hinweises auf die Patenterteilung: **26.07.2023**
(21) Anmeldenummer: 20853531.0
(22) Anmeldetag: 11.12.2020
(51) Int. Cl.: F16K 11/087, F16K 11/085, F01P 7/14

(54) **VORRICHTUNG ZUR HANDHABUNG VON FLUID INNERHALB EINES ZUMINDEST TEILWEISE ELEKTRISCH ANGETRIEBENEN FAHRZEUGS**
DEVICE FOR HANDLING FLUID WITHIN AN AT LEAST PARTIALLY ELECTRICALLY DRIVEN VEHICLE
DISPOSITIF POUR MANIPULER UN FLUIDE DANS UN VÉHICULE À ENTRAÎNEMENT ÉLECTRIQUE AU MOINS PARTIEL

(30) Priorität: 16.12.2019 DE 102019134435
(43) Veröffentlichungstag der Anmeldung: 26.10.2022
(73) Patentinhaber: ECO Holding 1 GmbH, 97828 Marktheidenfeld (DE)
(72) Erfinder: DEHRMANN, Sven, 76744 Wörth (DE); MUDRA, Alexander, 97828 Marktheidenfeld (DE); KREBS, Johannes, 73061 Ebersbach (DE)
(74) Vertreter: Keller Schneider Patentanwaltsgesellschaft mbH
(86) Internationale Anmeldenummer: PCT/EP2020/085697
(87) Internationale Veröffentlichungsnummer: WO 2021/122357

(56) Entgegenhaltungen:
- WO-A1-2019/206741
- DE-A1- 19 525 062
- DE-A1-102018 214 174
- GB-A- 2 268 999
- US-A1- 2019 136 724

## Beschreibung

Die Erfindung betrifft eine Vorrichtung zur Handhabung von Fluid innerhalb eines zumindest teilweise elektrisch angetriebenen Fahrzeugs.

Derartige Vorrichtungen sind im Stand der Technik auch als Energieoptimierungsmodul oder als Thermomanagement-Vorrichtung bekannt. Im Wesentlichen erfüllt die Thermomanagement-Vorrichtung die Aufgabe der energetischen Optimierung des Wärmehaushalts im Kraftfahrzeug mit dem Ziel der Verbrauchs- und Emissionsreduzierung, der Gewährleistung der Motorkühlung in jedem Betriebspunkt sowie der Optimierung des Innenraumkomforts. Ziel ist es, die Wärmeströme wie Wärmezu- und Wärmeabfuhr im Verbrennungsmotor, Getrieben oder Fahrgastraum optimal zu leiten, um den Energieverbrauch zu reduzieren und den Innenraumkomfort zu erhöhen. Wärme wird dabei mittels eines Wärmeträgers, wie Kühlmittel oder Luft, meist durch erzwungene Konvektion von einem Körper zu einem anderen Körper transportiert. Über Wärmeüberträger, wie beispielsweise Kühler, Ladeluftkühler, AGR-Kühler oder Klima-Kondensatoren, wird Wärme von einem Fluid an ein anderes Fluid übertragen. Die Stoffströme der Fluide werden insbesondere durch Pumpen aufrechterhalten. Einen ausreichenden Kühlluftmassenstrom gewährleistet oftmals der Fahrtwind, so dass viele Fahrzeuge mit elektrisch angetriebenen Kühlerlüftern ausgerüstet werden, sofern der Fahrfahrtwind nicht ausreicht.

Derartige Thermomanagement-Module sind im Stand der Technik hinlänglich bekannt. Beispielsweise ist aus der WO 2017/223232 A2 eine integrierte Kühlmittelflaschenanordnung bekannt. Die Kühlmittelflaschenanordnung beinhaltet einen Behälter, der für den Einsatz in einem Thermosystem konfiguriert ist. Beispiele für solche thermischen Systeme sind ein Kühl-/Heizsystem eines batteriebetriebenen Elektrofahrzeugs, elektrische Stromerzeuger (z.B. motorbasierte Systeme), andere physikalische Anlageninstallationen, usw. Ein solches Reservoir beinhaltet einen ersten Abschnitt und einen zweiten Abschnitt. Der zweite Abschnitt ist mit dem ersten Abschnitt an einer Speicherschnittstelle verbunden und bildet so den Speicher, der für die Speicherung und/oder Strömung eines flüssigen Mediums konfiguriert ist. Der erste Abschnitt kann einen integrierten Kanal beinhalten, der einen Weg für den Durchfluss des flüssigen Mediums bietet. Der Speicher kann auch eine Komponentenschnittstelle beinhalten, die dazu konfiguriert ist, den Anschluss einer Komponente daran zu erleichtern. Derartige Komponenten sind beispielsweise eine Pumpe, eine Batteriepumpe, eine Antriebsstrangpumpe, eine Kältemaschine, eine Heizung, einen Filter, ein Belüfter, ein Ventil, einen Stecker, ein Lüfter oder ein Kühler.

Ferner ist aus der DE 10 2018 102 542 A1 eine Vorrichtung zur Handhabung zumindest eines Fluids innerhalb eines Fahrzeugs, insbesondere eines zumindest teilweise elektrisch angetriebenen Fahrzeugs, bekannt. Die Vorrichtung umfasst zumindest ein im wesentlichen plattenförmig ausgebildetes erstes Verteilelement und zumindest ein zweites, im Wesentlichen parallel zu dem ersten Verteilelement angeordnetes Verteilelement, wobei das erste Verteilelement und/oder das zweite Verteilelement zumindest bereichsweise zumindest ein Fluidhandhabungselement umfasst bzw. umfassen und wobei das erste Verteilelement und das zweite Verteilelement zumindest bereichsweise Kunststoff umfassen sowie ein Verfahren zur Herstellung einer Vorrichtung zur Handhabung zumindest eines Fluids, insbesondere zumindest einer erfindungsgemäßen Vorrichtung.

Aus der WO 2019/206741 A1 ist eine Dichtung zur Verwendung in einem Fluidventil und zur Unterteilung einer Ventilkammer zwischen zwei benachbarten Anschlüssen des Fluidventils bekannt. Darüber hinaus wird in der WO 2019/206741 A1 auch eine Dichtungsanordnung mit einer solchen Dichtung, sowie ein Mehrwege-Fluidventil mit einer solchen Dichtungsanordnung beschrieben.

Bei den bekannten Thermomanagement-Modulen besteht ein Problem dahingehend, dass die einzelnen Komponenten teilweise dezentral in einem Kraftfahrzeug angeordnet sind und über Verbindungsschläuche, Kabel und Steuergeräte miteinander verbunden sind. Dies hat die Konsequenz, dass die Verbindungsschläuche, Kabel und Steuergeräte mitunter über große Wegstrecken verteilt sind und der Montageaufwand groß ist. Zudem besteht ein hohes Risiko hinsichtlich Leckagen und Kurzschlüssen, wodurch die Zuverlässigkeit und Reparaturanfälligkeit des gesamten Thermomanagement-Moduls leidet. Zusätzlich besteht das Problem, dass es beispielsweise durch auftretende Leckagen häufig zu Druck- und Spannungsverlusten kommt. Zusätzlich wird dieses Problem auch durch große Kabellängen oder Korrosion verstärkt.

Des Weiteren besteht ein besonderes Bedürfnis dahingehend, Strömungsverluste an Schnittstellen und Fluidventilen zu reduzieren. Hierbei wird von der Tatsache ausgegangen, dass Strömungsverluste an Ventilen insbesondere durch Abweichungen von der Idealgeometrie zustande kommen. Diese äußern sich in Druckdifferenzen vor und hinter einem Ventil. Wegen der Druckverluste ist es eventuell sogar notwendig, einen höheren Eingangsdruck im System vorzusehen, um die auftretenden Druckverluste auszugleichen. Konsequenz eines höheren Eingangsdrucks ist eine jedoch eine erhöhte Leckage.

Der Erfindung liegt daher die Aufgabe zugrunde, ein Thermomanagement-Modul mit einer Ventileinrichtung anzugeben, das die Probleme aus dem Stand der Technik überwindet.

Die erfindungsgemäße Lösung besteht darin, eine Vorrichtung zur Handhabung von Fluid eines zumindest teilweise elektrisch angetriebenen Fahrzeugs bereitzustellen. Die Vorrichtung mit einer Ventileinrichtung, umfassend ein Ventilgehäuse, wobei das Ventilgehäuse zumindest zwei radial angeordnete Anschlussöffnungen und zumindest eine axial angeordnete Anschlussöffnung zum Ein- und/oder Ausströmen von Fluid aufweist. Zudem umfasst die Ventileinrichtung einen Ventilkörper, welcher innerhalb des Ventilgehäuses angeordnet und um eine axiale Rotationsachse R drehbar ausgebildet ist, wobei der Ventilkörper einen ersten bogenförmig ausgebildeten Verbindungskanal zum Verbinden von zwei radial angeordneten Anschlussöffnungen und einen zweiten bogenförmig ausgebildeten Verbindungskanal zum Verbinden einer radial angeordneten Anschlussöffnung mit einer axial angeordneten Anschlussöffnung aufweist. Die zumindest zwei radial angeordneten Anschlussöffnungen definieren eine Basisebene B, welche orthogonal zur axialen Rotationsachse R ausgebildet ist, und der erste bogenförmige Verbindungskanal definiert eine erste Verbindungskanalebene V, wobei die erste Verbindungskanalebene V gegenüber der Basisebene B einen ersten Neigungswinkel α aufweist, welcher größer 0° ist.

Dadurch wird beispielsweise der technische Vorteil erreicht, dass eine möglichst widerstandsreduzierte Strömung durch die bogenförmigen Verbindungskanäle möglich ist. Durch den ersten Neigungswinkel schränken sich die Verbindungskanäle nicht unmittelbar gegenseitig ein. Mit anderen Worten kann jeder Verbindungskanal ohne Vorsprünge und ohne strömungsverursachende Kanten ausgerichtet werden. Dies wiederrum reduziert die Druckdifferenzen des Fluides vor und nach dem Verbindungskanal erheblich.

Ein Fluid im Sinne dieser Erfindung kann jede Form von Kühlwasser, Kühl- oder Kältemittel verstanden werden. Beispielsweise ist dem wasserbasierten Fluid Glycol oder ein Glycolgemisch beigefügt, um die Gefrierpunkt des Fluids herabzusetzen. Alternativ kann das Fluid auch auf einer Ölbasis hergestellt sein, um die elektrische Leitfähigkeit des Fluids auszuschließen. Dies bringt den zusätzlichen Vorteil mit sich, dass elektrische Zellen direkt gekühlt werden können.

Die Definition der Basiseben B kann alternativ auch durch den geometrischen Mittelpunkt der zwei Anschlussöffnungen erfolgen. Alternativ wäre es ebenfalls denkbar den Neigungswinkel α als Abweichung des rechten Winkels zwischen der ersten Verbindungskanalebene V und der Rotationsachse R zu definieren. Wenn also in einem konkreten Beispiel der Neigungswinkel α zwischen der ersten Verbindungskanalebene V gegenüber der Basisebene B 5° beträgt, so schneiden sich die Rotationsachse R und die erste Verbindungskanalebene V in einem Winkel 95°.

Nach einer bevorzugten Ausführungsform ist der erste Neigungswinkel α kleiner 45°, insbesondere kleiner 30°, insbesondere kleiner 15°, insbesondere kleiner 5°. Dadurch kann den konkreten Gegebenheiten ausreichend Rechnung getragen werden. Beispielsweise hängt die konkrete Neigung des ersten Neigungswinkels α von dem Durchmesser des Ventilkörpers und dem Durchmesser des Verbindungskanals ab.

Gemäß einer weiteren Ausführungsform definieren eine radial angeordnete Anschlussöffnung und eine axial angeordnete Anschlussöffnung eine Axialebene A und der zweite bogenförmig ausgebildete Verbindungskanal eine zweite Verbindungskanalebene W, wobei die Axialebene A gegenüber der zweiten Verbindungskanalebene W einen zweiten Neigungswinkel β aufweist, welcher größer 0° ist. Dadurch wird beispielsweise der technische Vorteil erreicht, dass zusätzlicher Spielraum für eine widerstandsreduzierte Strömung durch die bogenförmigen Verbindungskanäle möglich ist. Durch den zweiten Neigungswinkel wird eine gegenseitige Einschränkung der Verbindungskanäle zusätzlich reduziert und jeder Verbindungskanal kann weitestgehend ohne Vorsprünge und ohne strömungsverursachende Kanten ausgerichtet werden. Dies wiederrum reduziert die Druckdifferenzen des Fluides vor und nach dem Verbindungskanal erheblich.

Nach einer weiteren bevorzugten Ausführungsform ist der zweite Neigungswinkel β kleiner 45°, insbesondere kleiner 30°, insbesondere kleiner 15°, insbesondere kleiner 5°. Dadurch kann die Vorrichtung optimal an die konkreten Gegebenheiten angepasst werden. Beispielsweise hängt die konkrete Neigung des zweiten Neigungswinkels β von dem Durchmesser des Ventilkörpers und dem Durchmesser des Verbindungskanals ab.

Gemäß eine zusätzlichen Ausführungsform weist der zweite bogenförmig ausgebildete Verbindungskanal zum Verbinden einer radial angeordneten Anschlussöffnung mit einer axial angeordneten Anschlussöffnung einen zusätzlichen Verbindungskanal zum Verbinden einer zweiten radial angeordneten Anschlussöffnung mit der axial angeordneten Anschlussöffnung auf. Dadurch wird beispielsweise der technische Vorteil erreicht, dass auch in dieser Ausführungsform durch das Vorsehen von ersten und/ oder zweiten Neigungswinkeln eine Reduzierung von Druckdifferenzen erreicht werden kann. Beispielsweise kann der erste Neigungswinkel des ersten Verbindungskanals unabhängig von der Ausgestaltung des zweiten Verbindungskanals ausgestaltet werden. Aber auch der zweite Verbindungskanal lässt sich auch in Verbindung mit einer zweiten radial angeordneten Anschlussöffnung kombinieren.

Um die Druckdifferenz vor und nach dem Ventil zusätzlich zu reduzieren ist der Ventilkörper kugelartig ausgebildet und weist eine Lagerung auf, welche außerhalb des Ventilkörpers angeordnet ist. Dadurch wird beispielsweise der technische Vorteil erreicht, dass die Lagerung nicht in Wechselwirkung mit der Fluidströmung innerhalb des Ventilkörpers treten kann. Beispielsweise ist die Lagerung oberhalb des Ventilkörpers angeordnet und lagert gleichzeitig eine Antriebswelle zum Überführen des Ventilkörpers von einer ersten Schaltstellung in eine zweite Schaltstellung. Alternativ kann der Ventilkörper auch zylinderförmig ausgebildet sein, wobei alle anderen Merkmale im Zusammenhang mit der zylindrischen Ausgestaltung kombinierbar sind.

Nach einer besonders vorteilhaften Ausführungsform umfasst der Ventilkörper zumindest zwei miteinander verschweißt ausgebildete Teilkörper. Dadurch wird der technische Vorteil erreicht, dass die Herstellung des Ventilkörpers besonders einfach erfolgen kann. Beispielsweise können die einzelnen Teilkörper im Spritzgussverfahren hergestellt und anschließend miteinander verklebt oder verschweißt werden. Alternativ kann der Ventilkörper jedoch auch additiv oder in einem Gussdruckverfahren hergestellt werden.

Um die Lagerung zusätzlich zu stabilisieren und um ein Kippen des Ventilkörpers zu verhindern, umfasst die Lagerung einen Lagerring, welcher der axialen Anschlussöffnung zugeordnet ist.

Um die Druckdifferenz vor und nach dem Ventil zusätzlich zu reduzieren ist zumindest einer Anschlussöffnung des Ventilgehäuses ein Dichtungselement zugeordnet, wobei ein Innendurchmesser eines korrespondierenden Verbindungskanals im Wesentlichen mit dem Innendurchmesser des Dichtungselements identisch ist. Dadurch wird beispielsweise der technische Vorteil erreicht, die Strömung von Fluid nicht nur innerhalb des Verbindungskanals, sondern darüber hinaus auch in dem Dichtungselement optimiert wird. Mit anderen Worten wird das Dichtungselement derart ausgestaltet, dass der Innendurchmesser des Dichtungselements den Verbindungskanal fortsetzt oder verlängert. Somit entsteht kein Fluidrückstau oder sonstige Strömungseffekte aufgrund eines Vorsprungs im Dichtungselement. Damit wird die Druckdifferenz der Fluides zusätzlich reduziert. Beispielsweise ist jeder Anschlussöffnung ein derartiges Dichtungselement zugeordnet.

Nach einer weiteren Ausführungsform ist dem Dichtelement dem Federelement zugeordnet, welches entlang des Umfangs angeordnet ist und dazu ausgebildet ist eine axiale Kraft zur Reduzierung von Leckage zu bewirken. Das Federelement kann beispielsweise aus Federstahl oder als O-Ring ausgebildet sein. Das Federelement bewirkt ein lückenloses Anliegen des Dichtelements am Ventilkörper, wodurch die Fluidströmung zusätzlich optimiert und Druckdifferenzen vor und nach dem Ventilkörper weiter reduziert werden können.

Um die Leckage zusätzlich zu reduzieren und um die Montierbarkeit des Dichtungselements zu verbessern, umfasst das Dichtungselement Teflon. Das heißt entweder besteht es aus Teflon oder ist damit beschichtet. Zusätzlich ist Teflon besonders temperaturbeständig, wodurch auch die Einsatzdauer der Ventileinrichtung gesteigert werden kann.

Nach einer weiteren bevorzugten Ausführungsform umfasst der Ventilkörper zumindest eine Kontur, welche dem Eintritt und/ oder dem Austritt des ersten Verbindungskanals oder des zweiten Verbindungskanals zugeordnet ist. Dadurch wird beispielsweise der technische Vorteil erreicht, dass der Öffnungsquerschnitt Verbindungskanals beim Überführen von einer Schaltposition in eine weitere Schaltposition kontinuierlich erfolgen kann. Dadurch kann beispielsweise das Durchflussverhalten besser geregelt werden.

Darauf aufbauend ist die Kontur entlang der Basisebene des Ventilgehäuses ausgebildet. Somit ist eine Längsausdehnung der Kontur orthogonal zur Rotationsachse R ausgebildet, wodurch die Regelbarkeit des Ventils optimal gewährleistet ist.

Nach einer zusätzlichen Ausführungsform umfasst die Vorrichtung ein Vorrichtungsgehäuse mit einem ersten Gehäuseabschnitt und einen zweiten Gehäuseabschnitt, wobei der erste Gehäuseabschnitt und der zweite Gehäuseabschnitt durch eine fluidisch undurchlässige Konturwand aneinander angrenzend ausgebildet sind. Die Konturwand weist eine zum ersten Gehäuseabschnitt orientierte Seite und eine zum zweiten Gehäuseabschnitt orientierte Seite auf. Zusätzlich umfasst die Vorrichtung zumindest ein Fluidhandhabungselement, wobei das Fluidhandhabungselement ein Mittel zum Erzeugen eines steuerbar veränderlichen Magnetfelds, welches in dem ersten Gehäuseabschnitt angeordnet ist, und ein Mittel in Form der Ventileinrichtung, welches durch das erzeugte Magnetfeld bewegbar ist und in dem zweiten Gehäuseabschnitt angeordnet ist. Dadurch ergibt sich beispielsweise der technische Vorteil, dass zwischen dem Mittel zum Erzeugen eines steuerbar veränderlichen Magnetfeldes und dem durch das erzeugte Magnetfeld bewegbare Mittel lediglich eine magnetische Kopplung besteht. Diese magnetische Kopplung wirkt durch die fluidisch undurchlässige Konturwand hindurch und ermöglicht, dass das durch das erzeugte Magnetfeld bewegbare Mittel nasslaufend in dem zweiten Gehäuseabschnitt im Fluid anzuordnen. Das Mittel zum Erzeugen eines steuerbar veränderlichen Magnetfeldes hingegen, ist zusammen mit der Steuereinheit im "hydraulisch entkoppelten", trockenen ersten Gehäuseabschnitt angeordnet. Die Trennung zwischen wasserführendem zweiten Gehäuseabschnitt und der Elektronik im ersten Gehäuseabschnitt reduziert das Risiko von Leckagen und Kurzschlüssen. Zudem ist es nicht notwendig dynamische Dichtungen einzusetzen. Somit entsteht keine Verlustwärme durch Reibung und die Energieeffizienz nimmt zu. Insgesamt lässt sich dadurch ein höherer Wirkungsgrad erreichen. Somit kann die Ventileinrichtung vollständig im zweiten Gehäuseabschnitt angeordnet werden.

Gemäß einer weiteren Ausführungsform, weist das Mittel zum Erzeugen eines steuerbar veränderlichen Magnetfelds einen Stator und das durch das erzeugte Magnetfeld bewegbare Mittel in Form der Ventileinrichtung einen Rotor auf. Durch die Rotor-Stator-Anordnung kann mittels der magnetischen Kopplung durch die fluidisch undurchlässige Konturwand hindurch ein Drehmoment erzeugt werden, welches zum Überführen des Ventilkörpers von einer ersten in eine zweite Schaltposition genutzt werden kann. Alternativ kann das Fluidhandhabungselement beispielsweise einen Elektromotor, eine Spulenanordnung oder einen Schaltmagneten als Mittel zum Erzeugen eines steuerbar veränderlichen Magnetfelds aufweisen, welches in dem ersten Gehäuseabschnitt angeordnet ist.

Zusätzliche ist es möglich das Drehmoment mittels eines nasslaufenden Getriebes auf den Ventilkörper zu übertragen. Dadurch wird beispielsweise der technische Vorteil erreicht, dass das am Rotor erzeugte Drehmoment jeweils an die notwendige Funktion angepasst werden kann. Beispielsweise können verschiedene Stufen zur Übersetzung eingesetzt werden. Das Getriebe kann direkt im Fluid und somit in dem zweiten Gehäuseabschnitt angeordnet werden. Hierdurch werden keine dynamischen Dichtungen benötigt. Die potenziell notwendige Schmierung kann direkt über das Kühlwasser erfolgen und entstehende Verlustwärme durch Reibung wird direkt in das Kühlfluid abgegeben.

Nach einer weiteren Ausführungsform weist die Konturwand eine zylinderförmige Ausbuchtung auf, welche einen Innenraum eines im ersten Gehäuseabschnitt angeordneten Stators zumindest im Wesentlichen füllt. Dadurch wird beispielsweise der technische Vorteil erreicht, dass die Konturwand durch ihre Ausbuchtung die genaue Einbauposition des Stators vorgibt. Somit bekommt die Konturwand eine Doppelfunktion. Einerseits die erfindungswesentliche fluidische Undurchlässigkeit und andererseits die Positionierung des Stators im ersten Gehäuseabschnitt.

Zusätzlich dient die Konturwand zur Zentrierung des Rotors im Stator.

Nach einer noch weiteren Ausführungsform, ist die zylinderförmige Ausbuchtung zum Aufnehmen eines im zweiten Gehäuseabschnitt angeordneten Rotors ausgebildet. Dadurch wird beispielsweise der zusätzliche Vorteil erreicht, dass ein im zweiten Gehäuseabschnitt angeordneter Rotor in Bezug auf den Stator optimal ausgerichtet ist. Zudem kann die zylinderförmige Ausbuchtung als Führung des Rotors im Betrieb dienen, wobei die fluidische Undurchlässigkeit nicht eingeschränkt wird und die Trennung zwischen wasserführendem zweiten Gehäuseabschnitt und der Elektronik im ersten Gehäuseabschnitt bleibt gewährleistet.

Gemäß einer weiteren Ausführungsform umfasst die Vorrichtung ein zweites Fluidhandhabungselement, welches eine Fluidpumpe aufweist. Dadurch kann beispielsweise der technische Vorteil erreicht werden, dass durch die Fluidpumpe ein Fluidkreislauf gesteuert werden kann.

Gemäß einer besonderen Ausführungsform, sind die Rotorachsen der Fluidhandhabungselemente parallel zueinander angeordnet. Dadurch wird der besondere Vorteil erreicht, dass die Fertigung und die Montage in dieser Anordnung besonders einfach sind. Zusätzlich können einzelne Baugruppen einfach getestet und ausgetauscht werden.

Ein weiterer Aspekt besteht darin, eine Vorrichtung zur Handhabung von Fluid innerhalb eines zumindest teilweise elektrisch angetriebenen Fahrzeugs anzugeben, wobei die Vorrichtung ein Vorrichtungsgehäuse, einen ersten Gehäuseabschnitt und einen zweiten Gehäuseabschnitt umfasst, wobei der erste Gehäuseabschnitt und der zweite Gehäuseabschnitt durch eine fluidisch undurchlässige Konturwand aneinander angrenzend ausgebildet sind. Ferner umfasst die Konturwand eine zum ersten Gehäuseabschnitt orientierte Seite und eine zum zweiten Gehäuseabschnitt orientierte Seite, zumindest ein Fluidhandhabungselement, wobei das Fluidhandhabungselement ein Mittel zum Erzeugen eines steuerbar veränderlichen Magnetfelds, welches in dem ersten Gehäuseabschnitt angeordnet ist, und ein Mittel, welches durch das erzeugte Magnetfeld bewegbar ist und in dem zweiten Gehäuseabschnitt angeordnet ist, umfasst.

Dadurch ergibt sich beispielsweise der technische Vorteil, dass zwischen dem Mittel zum Erzeugen eines steuerbar veränderlichen Magnetfeldes und dem durch das erzeugte Magnetfeld bewegbare Mittel lediglich eine magnetische Kopplung besteht. Diese magnetische Kopplung wirkt durch die fluidisch undurchlässige Konturwand hindurch und ermöglicht, dass das durch das erzeugte Magnetfeld bewegbare Mittel nasslaufend in dem zweiten Gehäuseabschnitt im Fluid anzuordnen. Das Mittel zum Erzeugen eines steuerbar veränderlichen Magnetfeldes hingegen, ist zusammen mit der Steuereinheit im "hydraulisch entkoppelten", trockenen ersten Gehäuseabschnitt angeordnet. Die Trennung zwischen wasserführendem zweiten Gehäuseabschnitt und der Elektronik im ersten Gehäuseabschnitt reduziert das Risiko von Leckagen und Kurzschlüssen. Zudem ist es nicht notwendig dynamische Dichtungen einzusetzen. Somit entsteht keine Verlustwärme durch Reibung und die Energieeffizienz nimmt zu. Insgesamt lässt sich dadurch ein höherer Wirkungsgrad erreichen.

Eine fluidisch undurchlässige Konturwand im Sinne der Erfindung ist als kontinuierliche Trennschicht zu verstehen, welche zumindest zwischen dem Mittel zum Erzeugen eines steuerbar veränderlichen Magnetfelds und dem Mittel, welches durch das erzeugte Magnetfeld bewegbar ist, ohne Unterbrechungen kontinuierlich ausgebildet ist. Als fluidisch undurchlässig ist hierbei zu verstehen, dass kein Fluidaustausch durch die Konturwand hindurch stattfinden kann. Die fluidisch undurchlässige Konturwand kann beispielsweise auf ein Fluidhandhabungselement beschränkt sein. Alternativ kann die Konturwand auch als kontinuierliche Trennschicht zur Aufnahme mehrerer Fluidhandhabungselemente verstanden werden. Im Gegensatz zu bekannten elastisch verformbaren Abdichtungen auf Elastomerbasis finden keine Leckagen aufgrund von Umströmung statt. Die undurchlässige Konturwand versteht sich wie eine durchgehende Mantelfläche. Beispielsweise kann die kontinuierliche Trennschicht auch die Oberfläche eines Kunststoffkörpers sein, welcher das Mittel, welches durch das erzeugte Magnetfeld bewegbar ist, in sich trägt und welches durch das Mittel zum Erzeugen eines steuerbar veränderlichen Magnetfelds von der Außenfläche des Kunststoffkörpers steuerbar ist.

Als Mittel zum Erzeugen eines steuerbar veränderlichen Magnetfelds kann jedes Mittel verstanden werden, welches dazu geeignet ist mit Hilfe von elektrischem Strom ein magnetisches Feld zu erzeugen. Das magnetische Feld ist durch die Einspeisung von Strom steuerbar ausgebildet, was im einfachsten Fall zumindest das Ein- und Ausschalten des Magnetfeldes bedeutet. Geeigneter Weise ist es jedoch auch möglich, die Stärke des Magnetfeldes zwischen dem Ein- und Ausschalten zu variieren. Beispielsweise sind als derartige Mittel elektrische Spulenanordnungen, elektrische Magnete, Schrittmotoren, Schaltmagnete, Bürstenlose Motoren, Klauenmotoren oder aber auch elektrische Linearaktuatoren denkbar.

Hingegen sind als durch das erzeugte Magnetfeld bewegbare Mittel beispielsweise Permanentmagnete, ferromagnetische Körper oder Körper mit Werkstoffen auf Basis von seltenen Erden denkbar.

Gemäß einer vorteilhaften Weiterbildung der Erfindung weist das Mittel zum Erzeugen eines steuerbar veränderlichen Magnetfelds einen Stator und das durch das erzeugte Magnetfeld bewegbare Mittel einen Rotor auf. Durch die Rotor-Stator-Anordnung kann mittels der magnetischen Kopplung durch die fluidisch undurchlässige Konturwand hindurch ein Drehmoment erzeugt werden. Alternativ kann das Fluidhandhabungselement beispielsweise einen Elektromotor, eine Spulenanordnung oder einen Schaltmagneten als Mittel zum Erzeugen eines steuerbar veränderlichen Magnetfelds aufweisen, welches in dem ersten Gehäuseabschnitt angeordnet ist.

Nach einer weiteren Ausführungsform, weist die Konturwand eine zylinderförmige Ausbuchtung auf, welche einen Innenraum eines im ersten Gehäuseabschnitt angeordneten Stators zumindest im Wesentlichen füllt. Dadurch wird beispielsweise der technische Vorteil erreicht, dass die Konturwand durch ihre Ausbuchtung die genaue Einbauposition des Stators vorgibt. Somit bekommt die Konturwand eine Doppelfunktion. Einerseits die erfindungswesentliche fluidische Undurchlässigkeit und andererseits die Positionierung des Stators im ersten Gehäuseabschnitt.

Nach einer noch weiteren Ausführungsform, ist die zylinderförmige Ausbuchtung zum Aufnehmen eines im zweiten Gehäuseabschnitt angeordneten Rotors ausgebildet. Dadurch wird beispielsweise der zusätzliche Vorteil erreicht, dass ein im zweiten Gehäuseabschnitt angeordneter Rotor in Bezug auf den Stator optimal ausgerichtet ist. Zudem kann die zylinderförmige Ausbuchtung als Führung des Rotors im Betrieb dienen, wobei die fluidische Undurchlässigkeit nicht eingeschränkt wird und die Trennung zwischen wasserführendem zweiten Gehäuseabschnitt und der Elektronik im ersten Gehäuseabschnitt bleibt gewährleistet.

Nach einer weiteren vorteilhaften Ausführungsform, ist der zweite Gehäuseabschnitt fluidführend ausgebildet und umfasst zumindest einen Anschluss zum Ein- und/ oder Ausströmen von Fluid. Dadurch wird beispielsweise der technische Vorteil erreicht, dass der zweite Gehäuseabschnitt ohne elektrische Schnittstellen konzipiert werden kann. Lediglich das Zuführen, das Umleiten und das Ableiten von Fluid steht im Vordergrund, wobei das Herstellen des zweiten Gehäuseabschnitts durch preiswerte Materialauswahl und die geeignete Fügeverfahren gekennzeichnet ist. Beispielsweise kann der zweite Gehäuseabschnitt mittels Vibrationsschweissen oder Spiegelschweissen hergestellt werden, was im Zusammenhang mit der elektronischen Steuereinheit aus thermischen Gründen problematisch wäre und somit nur getrennt umgesetzt werden kann. Es können auch mehrere Anschlüsse zum Ein- und/ oder Ausströmen von Fluid realisiert werden. Die Anschlüsse stellen hierbei die Kundenschnittstelle dar. Es können Schlauchdurchmesser, Anzahl und die entsprechenden Positionen der Anschlüsse variiert werden. Je nach Kundenanforderungen kann auch die Richtung der Anschlüsse angepasst werden, wobei auch eine variable Verstellbarkeit der Anschlüsse denkbar wäre.

Um die gesamte Vorrichtung möglichst flexibel an spezifische Kundenanforderungen anzupassen, kann jedem Fluidhandhabungselement eine andere Funktion in der Vorrichtung zugeordnet werden. Hierfür weist das Fluidhandhabungselement eine Fluidpumpe oder Fluidventil auf. Je nach Einsatzzweck wird also die Ausführung eines Fluidhandhabungselements umgesetzt, wobei in jeder Ausgestaltung die magnetische Kopplung in Verbindung mit der fluidisch undurchlässigen Konturwand bestehen bleibt und das durch das erzeugte Magnetfeld bewegbare Mittel nasslaufend in dem zweiten Gehäuseabschnitt im Fluid angeordnet wird.

Nach einer bevorzugten Ausführungsform, ist dem Rotor ein Mittel zum Fördern und/ oder zum Steuern von Fluid zugeordnet. Aufgrund der magnetischen Kopplung zwischen Stator und Rotor, wird ein an dem Rotor angeordneter Magnet durch den Stator in Rotation versetzt. An dem Rotor selbst können zusätzlich unterschiedliche Mittel angeordnet werden, welche von der gewünschten Funktion des jeweiligen Fluidhandhabungselements abhängen. Zum Fördern eines Fluides kann beispielsweise eine Pumpe mit Impeller oder mit Laufrad eingesetzt werden. Zum Steuern oder Umleiten des Fluides kann beispielsweise ein Drehschieber oder ein Schaltventil eingesetzt werden.

Nach einer alternativen Ausführungsform, umfasst das Mittel ein Schaltelement. Dadurch kann beispielsweise der technische Vorteil erreicht werden, dass das Schaltelement als Drehschieber ausgebildet werden kann. Dies macht die Vorrichtung bzw. das Fluidhandhabungselement an verschiedene Fahrzeuge und verschiedene Funktionen anpassbar. Unterschiedliche Bauräume und unterschiedliche Anforderungen seitens eines Fahrzeugherstellers machen verschiedene Schaltungsstrategien notwendig. Beispielsweise kann mittels eines Drehschiebers Fluid umgeleitet werden und es können eine Vielzahl von Anschlüssen und Schaltmodi realisiert werden.

Nach einer alternativen Ausführungsform, umfasst das Mittel ein Laufrad. Dadurch kann beispielsweise der technische Vorteil erreicht werden, dass das Laufrad direkt in einen Fluidkreislauf integriert werden kann. Durch die Stator-Rotor-Anbindung kann somit aus der Rotation eine Pumpenfunktion realisiert werden. Beispielsweise ist das Laufrad als Impeller ausgebildet.

Nach einer zusätzlichen Ausführungsform, ist dem Rotor ein nasslaufendes Getriebe zugeordnet. Dadurch wird beispielsweise der technische Vorteil erreicht, dass das am Rotor erzeugte Drehmoment jeweils an die notwendige Funktion angepasst werden kann. Beispielsweise können verschiedene Stufen zur Übersetzung eingesetzt werden. Das Getriebe kann direkt im Fluid und somit in dem zweiten Gehäuseabschnitt angeordnet werden. Hierdurch werden keine dynamischen Dichtungen benötigt. Die potenziell notwendige Schmierung kann direkt über das Kühlwasser erfolgen und entstehende Verlustwärme durch Reibung wird direkt in das Kühlfluid abgegeben. Alternativ zu dieser Ausführungsform ist es ebenfalls möglich den Rotor ohne nasslaufendes Getriebe zu betreiben. Beispielsweise kann der Rotor mittels einer Dichtung gegenüber dem Fluid abgedichtet sein. In der Konsequenz ist der Rotor trocken betätigbar.

In einer besonderen Ausführungsform, ist dem ersten Gehäuseabschnitt eine elektrische Steuereinheit zum Steuern der Vorrichtung zugeordnet. Die elektrische Steuereinheit ist zur Funktion der Vorrichtung notwendig und kann sowohl außerhalb des ersten Gehäuseabschnitts als auch innerhalb des ersten Gehäuseabschnitts angeordnet werden. Es ist ebenfalls denkbar, die Vorrichtung mit einer kundenseitigen externen Steuereinheit zu betreiben, wobei hierfür eine Schnittstelle an dem ersten Gehäuseabschnitt bereitgestellt werden kann. Alternativ oder zusätzlich lässt sich die Steuereinheit jedoch innerhalb des ersten Gehäuseabschnitts anordnen.

Darauf aufbauend ist die elektrische Steuereinheit innerhalb des ersten Gehäuseabschnitts angrenzend an die fluidisch undurchlässige Konturwand angeordnet. Es lässt sich beispielsweise der technische Vorteil erreichen, dass durch das Anordnen der elektrischen Steuereinheit an die fluidisch undurchlässige Konturwand innerhalb des ersten Gehäuseabschnitts, die elektrische Steuereinheit effektiv gekühlt werden kann. Diese Kühlung erfolgt zudem ohne ein Risiko des unmittelbaren Kontakts mit dem Fluid, wodurch Kurzschlüsse vermieden werden. Zusätzlich kann Fluid mit Verlustwärme geheizt werden. Ein weiterer Vorteil ist, dass die niedrige Kühlmitteltemperatur einen großen Temperaturunterschied zu der Chip-Temperatur der Leistungselektronik hat. Beispielsweise könnte ein Temperatursensor auf Seiten der elektrischen Steuereinheit - also im trockenen Be- reich - angeordnet werden, um die Fluidtemperatur zu messen. Der Sensor würde also durch die fluidisch undurchlässige Konturwand hindurch messen, wobei die Auswertung des Sensorsignals unmittelbar im trockenen Bereich des ersten Gehäuseabschnitts stattfinden kann.

Gemäß einer weiteren Ausführungsform, umfasst die Vorrichtung ein zweites Fluidhandhabungselement, welches eine Fluidpumpe aufweist. Dadurch kann beispielsweise der technische Vorteil erreicht werden, dass durch die zweite Fluidpumpe ein zusätzlicher Fluidkreislauf gesteuert werden kann.

Bei einer besonders bevorzugten Ausführungsform umfasst die Vorrichtung ein drittes Fluidhandhabungselement, welches ein Fluidventil aufweist. Das Fluidventil hat die Funktion eines Drehschiebers. Der Drehschieber macht die Vorrichtung an verschiedene Fahrzeuge anpassbar, wobei unterschiedliche Bauräume und unterschiedliche Anforderungen beispielsweise das Umleiten des Fluides notwendig machen können. Durch Umschalten von Schnittstellen kann hierbei von parallelen Kreisläufen auf serielle Kreisläufe umgeschaltet werden.

Nach einer besonderen Ausführungsform, weist das Fluidventil eine doppelte Drehschieberanordnung mit einer ersten Ebene und einer zweiten Ebene auf. Dadurch ergibt sich beispielsweise der technische Vorteil, dass mit nur einem Fluidhandhabungselement zwei Schaltstellungen in einem Drehschieber gleichzeitig angeordnet und betrieben werden können. Man spart sich beispielsweise ein weiteres Fluidhandhabungselement, da mit nur einer Rotor-Stator-Anordnung zwei Schaltstellungen gesteuert werden können. Beispielsweise kann es notwendig sein, dass unterschiedliche Bauräume bei unterschiedlichen Fahrzeugen mit Fluid versorgt werden müssen. Um ein das Austauschen des gesamten Fluidhandhabungselements zu verhindern, können die unterschiedlichen Ebenen der Drehschieberanordnung eingesetzt werden. Somit werden in Abhängigkeit des gewünschten Zwecks, unterschiedliche Fluidkanäle miteinander verbunden werden, ohne das gesamte Fluidhandhabungselement zu wechseln. Beispielsweise kann eine erste Ebene eine Ventilstellung beinhalten, welche ein Umleiten um 90° ermöglicht, während eine zweite Ebene eine Ventilstellung beinhalten, welche ein Umleiten von 180°, also geradeaus, ermöglicht. Durch entsprechende Nutzung der zugeordneten Anschlüsse der Drehschieberanordnung in der ersten oder der zweiten Ebene, wird die gewünschte Funktion realisiert.

Gemäß einer weiteren Ausführungsform, weist die Vorrichtung ein Expansionsventil für einen zugeordneten Wärmetauscher auf. Dadurch wird beispielsweise der technische Vorteil erreicht, dass auch ein Wärmetauscher in die Vorrichtung integriert werden kann und das Steuern des Expansionsventils in ähnlicher Weise mit den anderen Fluidhandhabungselementen der Vorrichtung erfolgen kann. Es ergibt sich eine zusätzliche Vereinfachung und der Herstellung und der Montage der Vorrichtung.

Darauf aufbauend umfasst der Wärmetauscher eine zugeordnete Heizvorrichtung. Die Heizvorrichtung kann vorzugsweise in den Wärmetauscher integriert werden, sodass ein Fluid unmittelbar erhitzt werden kann, welches sodann zum Heizen von Batterie, Motor oder Fahrzeuginnenraum eingesetzt werden kann. Der Wärmetauscher, auch als Chiller bezeichnet, hätte somit die Fähigkeit aktiv zu heizen oder zu kühlen.

Derartige Wärmetauscher werden in der Regel aus gestapelten Blechen gelötet. Die Bleche sind derart gelötet, dass immer abwechselnd ein Kanal eines ersten Fluides mit einem Kanal eines zweiten Fluides thermisch in Kontakt steht. Durch die große Kontaktfläche kann Wärme optimal übertragen werden. Beispielsweise kann die Tiefziehhülse in ein Paket gestapelter Bleche eingelötet werden, welche dann ähnlich einer konventionellen Heizpatrone mit Heizdraht und Isolationskeramik gefüllt werden können. Beispielsweise könnte die Heizvorrichtung auch induktiv betrieben werden, wobei ein induktiv wärmbarer Körper eingelegt wird und über eine umlaufende Induktionsspule beheizt werden könnte. Denkbar wäre hier auch ein kombiniertes Steuergerät einzusetzen, was zusätzlich Kabel einsparen und die Modulintegration vereinfachen würde. Insgesamt spart ein derartiger Wärmetauscher zusätzliche Schlauchverbindungen ein und macht die Vorrichtung kompakter.

Nach einer weiteren Ausführungsform, weist der erste Gehäuseabschnitt ein abnehmbares erstes Abdeckelement auf. Dadurch wird beispielsweise der technische Vorteil erreicht, dass zu Reparaturzwecken direkt auf den Trockenbereich und die Bestandteile der Elektronik in der Vorrichtung zugegriffen werden kann. Inspektionen oder Reparaturen werden dadurch deutlich vereinfacht.

Nach einer zusätzlichen Ausführungsform, weist der zweite Gehäuseabschnitt ein abnehmbares zweites Abdeckelement auf. Ebenfalls kann dadurch der technische Vorteil erreicht werden, dass zu Reparaturzwecken direkt auf alle nasslaufenden Bestandteile der Vorrichtung zugegriffen werden kann. Inspektionen oder Reparaturen werden ebenfalls erheblich vereinfacht.

Nach einer besonders bevorzugten Ausführungsform weist die Vorrichtung einen ersten Fluidkreislauf, welcher dem ersten Fluidhandhabungselement zugeordnet ist, und einen zweiten Fluidkreislauf, welcher dem zweiten Fluidhandhabungselement zugeordnet ist, auf. Dies macht die Vorrichtung besonders einfach betreibbar. In Kombination mit der doppelten Drehschieberanordnung könnte man beispielsweise mit zwei Fluidhandhabungselementen mit jeweils zwei Schaltstellungen in einem Drehschieber insgesamt vier Fluidkreisläufe betreiben. In Kombination mit serieller oder paralleler Anordnung lassen zusätzlich Funktionalitäten erreichen.

Gemäß einer besonderen Ausführungsform, sind die Rotorachsen der Fluidhandhabungselemente parallel zueinander angeordnet. Dadurch wird der besondere Vorteil erreicht, dass die Fertigung und die Montage in dieser Anordnung besonders einfach sind. Zusätzlich können einzelne Baugruppen einfach getestet und ausgetauscht werden.

Um die Flexibilität und die Integration der Vorrichtung in ein Fahrzeug zu verbessern, sind die Anschlüsse zum Ein- und/ oder Ausströmen von Fluid in einer Ebene angeordnet, welche in etwa orthogonal zur Orientierung der Rotorachsen der Fluidhandhabungselemente angeordnet ist.

Die Erfindung wird nachstehend anhand der Beschreibung von Ausführungsbeispielen unter Bezugnahme auf die beiliegenden Zeichnungen näher erläutert. Dabei ergeben sich aus der nachfolgenden Beschreibung und der Gesamtheit der Patentansprüche weitere vorteilhafte Ausführungsformen und Merkmalskombinationen der Erfindung.

Die zu der Erläuterung der Ausführungsbeispiele verwendeten Zeichnungen zeigen in:
- Fig. 1: eine Explosionsdarstellung einer Vorrichtung zur Handhabung eines Fluids nach einer ersten Ausführungsform;
- Fig. 2A: einen detaillierten Längsschnitt eines Fluidhandhabungselements der Vorrichtung;
- Fig. 2B: einen detaillierten Längsschnitt eines Fluidhandhabungselements der Vorrichtung nach einer alternativen Ausführungsform;
- Fig. 2C: einen detaillierten Längsschnitt eines Fluidhandhabungselements der Vorrichtung nach einer weiteren Ausführungsform;
- Fig. 3: eine Längsschnittansicht eines Fluidhandhabungselements der Vorrichtung;
- Fig. 4: einen detaillierten Längsschnitt eines weiteren Fluidhandhabungselements der Vorrichtung;
- Fig. 5: eine schematische Darstellung eines nasslaufenden Getriebes der Vorrichtung;
- Fig. 6: mehrere schematische Darstellungen einer Drehschieberanordnung der Vorrichtung;
- Fig. 7: eine Explosionsdarstellung einer erfindungsgemäßen Vorrichtung zur Handhabung eines Fluids nach einer weiteren Ausführungsform;
- Fig. 8: eine Schnittdarstellung einer erfindungsgemäßen Ventileinrichtung;
- Fig. 9: eine weitere Schnittdarstellung einer erfindungsgemäßen Ventileinrichtung;
- Fig. 10: eine Schnittdarstellung eines Ventilkörpers; und
- Fig. 11: eine perspektivische Darstellung eines Ventilkörpers nach einer weiteren Ausführungsform.

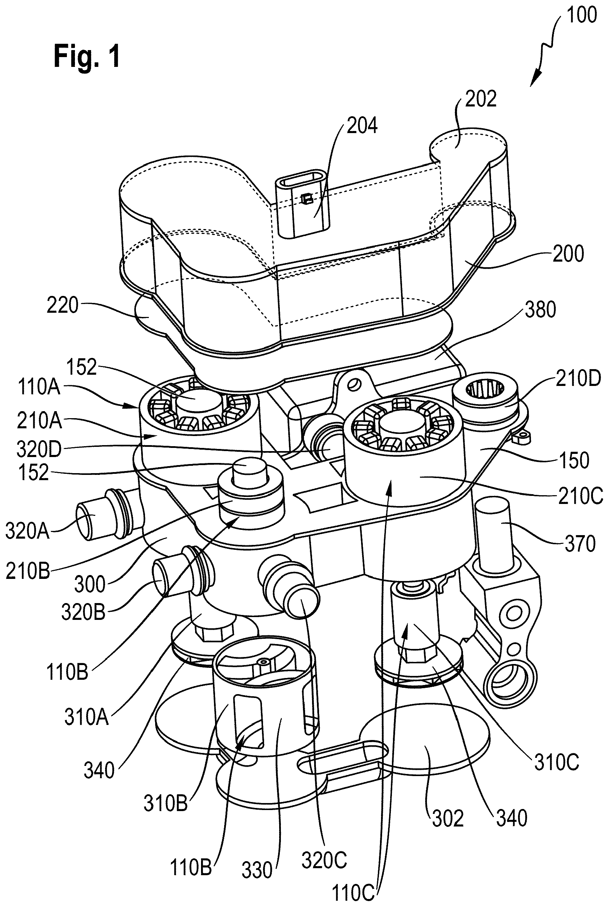

Die in den Figuren 1-7 dargestellten Ausführungsbeispiele dienen dem besseren Verständnis des allgemeinen technischen Gebiets. Die in den Figuren 1-7 dargestellten Ausführungsbeispiele fallen nicht unter den Anspruchsgegenstand.

Die Fig. 1 zeigt eine Explosionsdarstellung einer Vorrichtung 100 zur Handhabung eines Fluids nach einer ersten Ausführungsform. Die Vorrichtung 100 ist für den Einsatz in einem zumindest teilweise elektrisch betriebenen Fahrzeug vorgesehen.

Somit kann sie sowohl in rein elektrisch betriebenen Fahrzeugen als auch in Hybridfahrzeugen eingesetzt werden.

Die Vorrichtung 100 umfasst einen ersten Gehäuseabschnitt 200 und einen zweiten Gehäuseabschnitt 300, wobei der erste Gehäuseabschnitt 200 und der zweite Gehäuseabschnitt 300 durch eine fluidisch undurchlässige Konturwand 150 aneinander angrenzend ausgebildet sind. Die Konturwand 150 ist einstückig ausgebildet. In dieser Ausführungsform ist die Konturwand 150 gleichzeitig die Außenwand des zweiten Gehäuseabschnitts 300, wodurch die Außenwand identisch ist mit der zum ersten Gehäuseabschnitt 200 orientierten Seite des zweiten Gehäuseabschnitts 300.

Die Konturwand 150 weist auf der zum ersten Gehäuseabschnitt 200 orientierten Seite mehrere zylinderförmige Ausbuchtungen 152 auf. Auf diese zylinderförmige Ausbuchtungen 152 sind Mittel (210A, 210B, 210C) zum Erzeugen eines steuerbar veränderlichen Magnetfelds in Form von Statoren aufgebracht. Die zylinderförmigen Ausbuchtungen 152 ragen jeweils in den Innenraum jedes angeordneten Stators hinein und füllen diesen Innenraum derart aus, dass sich auf Seiten des zweiten Gehäuseabschnitts 300 Hohlzylinder ausbilden in welche dann die Mittel 310A, 310B, 310C, welche durch das erzeugte Magnetfeld bewegbar ausgebildet sind, einbringen lassen. Die Mittel 210A, 210B, 210C, 210D zum Erzeugen eines steuerbar veränderlichen Magnetfelds sind in der vorliegenden Ausführungsform als Statoren von Schrittmotoren ausgebildet, jedoch können sie ebenso als gewöhnliche Elektromotoren, Brushless DC - Motoren wie beispielsweise Klauenmotoren oder als Magnetventile ausgebildet sein.

Auf einer zum zweiten Gehäuseabschnitt 300 orientierten Seite (nicht gezeigt) der Konturwand 150 befinden sich Mittel 310A, 310B, 310C, welche durch das erzeugte Magnetfeld des jeweils zugeordneten Mittels 210A, 210B, 210C zum Erzeugen eines steuerbar veränderlichen Magnetfelds, bewegbar ausgebildet sind. Die Mittel 310A, 310B, 310C, welche durch das erzeugte Magnetfeld bewegbar ausgebildet sind, weisen jeweils einen Rotor mit einem zugeordneten Magnet auf. Der Rotor wird durch den Stator in Rotation versetzt, wodurch die Mittel 310A, 310B, 310C welche durch das Magnetfeld bewegbar ausgebildet sind durch den Stator steuerbar sind. Den Mittel 310A, 310B, 310C, welche durch das erzeugte Magnetfeld bewegbar sind, werden jeweils Mittel zum Fördern und/ oder zum Steuern von Fluid zugeordnet. So ist beispielsweise dem Stator des Mittels 210B zum Erzeugen eines steuerbar veränderlichen Magnetfeldes ein Schaltelement 330 zugeordnet, welches als Drehschieber ausgebildet ist. Durch den Drehschieber können unterschiedliche Bauräume und unterschiedliche Anforderungen mit jeweils verschiedene Schaltungsstrategien realisiert werden. So kann Fluid umgeleitet werden und unterschiedliche Anschlüsse und Schaltmodi sind miteinander kombinierbar.

Den Statoren der Mittel 210A, 210C zum Erzeugen eines steuerbar veränderlichen Magnetfeldes sind jeweils ein Laufrad 340 zugeordnet. Das Laufrad ist beispielsweise als Impeller ausgebildet und wird direkt in einen Fluidkreislauf innerhalb des zweiten Gehäuseabschnitts 300 integriert. Durch den Stator wird über die magnetische Kopplung zum Rotor ein Drehmoment erzeugt, welches zu einer Rotation des Impellers führt. Somit wird der Impeller als Pumpe des jeweils zugeordneten Fluidkreislaufs nutzbar.

Die Rotoren, welche den Mittel 310A, 310B, 310C welche durch das Magnetfeld bewegbar ausgebildet sind, zugeordnet sind, sind jeweils in die zylinderförmige Ausbuchtungen 152 der Konturwand 150 im zweiten Gehäuseabschnitt 300 eingebracht. Mit anderen Worten wird durch die zylindrische Ausbuchtung 152 sowohl die genaue Anordnung eines Stators im ersten Gehäuseabschnitt 200 als auch die genaue Anordnung eines Rotors im zweiten Gehäuseabschnitt 300 ermöglicht, wodurch eine exakte Zuordnung von Rotor und Stator untereinander realisiert wird. Die zylindrische Ausbuchtung erfüllt also die Doppelfunktion der Zuordnung von Rotor und Stator einerseits und die fluiddichte Trennung zwischen erstem Gehäuseabschnitt 200 und zweitem Gehäuseabschnitt 300, welcher als hydraulische Entkopplung bezeichnet werden kann.

Die Kombination aus Mittel 210A, 210B, 210C zum Erzeugen eines steuerbar veränderlichen Magnetfelds in Form eines Stators, welche im trockenen ersten Gehäuseabschnitt 200 angeordnet sind, das jeweils zugeordnete Mittel 310A, 310B, 310C, welches durch das erzeugte Magnetfeld bewegbar und im nassen zweiten Gehäuseabschnitt 300 angeordnet ist, und über die Konturwand 152 hinweg durch eine magnetische Kopplung betreibbar ist, beschreiben jeweils ein Fluidhandhabungselement 110A, 110B, 110C.

Eine Ausnahme bildet hierbei das Mittel 210D zum Erzeugen eines steuerbar veränderlichen Magnetfelds in Form eines Schrittmotors. Dieses ist im trockenen ersten Gehäuseabschnitt 200 zugeordnet. Dem Schrittmotor ist jedoch eine Expansionsventils 370 zugeordnet. Im Unterschied zu den bereits beschriebenen Fluidhandhabungselementen 110A, 110B, 110C existiert keine durchgehende fluidundurchlässige Konturwand 150 zwischen dem Mittel 210D zum Erzeugen eines steuerbar veränderlichen Magnetfelds und dem Mittel, welches durch das erzeugte Magnetfeld bewegbar ist. Letzteres ist in das Gehäuse des Expansionsventils 370 integriert und das Expansionsventil 370 ist lediglich parallel zu den anderen Fluidhandhabungselementen 110A, 110B, 110C am Gehäuse der Vorrichtung 100 angeordnet, wobei der Schrittmotor in den trockenen Bereich des ersten Gehäuseabschnitts 200 integriert ist. Um die notwendige Öffnung in der fluidundurchlässigen Konturwand 150 zum Durchführen des Expansionsventils 370 abzudichten, empfiehlt sich das Anordnen eines O-Rings.

Insgesamt verfügt die Vorrichtung 100 in der vorliegenden Ausführungsform über ein erstes Fluidhandhabungselement 110A, welches als Fluidpumpe ausgebildet ist. Zusätzlich umfasst die Vorrichtung 100 ein zweites Fluidhandhabungselement 110C, welches ebenfalls eine Fluidpumpe aufweist. Dadurch können zwei voneinander getrennte Fluidkreisläufe betrieben werden, bzw. es lässt sich damit Fluid von zwei getrennten Fluidkreisläufen befördern. Zusätzlich weist die Vorrichtung 100 ein drittes Fluidhandhabungselement 110B auf, welches ein Schaltelement 330 oder ein Fluidventil umfasst. Das Fluidventil ist mit einem Drehschieber ausgebildet und der Drehschieber macht die Vorrichtung 100 an verschiedene Fahrzeuge anpassbar. Unterschiedliche Bauräume und unterschiedliche Anforderungen des Fahrzeugs können beispielsweise durch Umleiten des Fluids realisiert werden. Durch Umschalten des Drehschiebers kann von parallelen Fluidkreisläufen auf serielle Fluidkreisläufe umgeschaltet werden. Zusätzlich können proportionale Mischverhältnisse dargestellt werden. Zusätzlich umfasst die Vorrichtung 100 ein Mittel 210D zum Erzeugen eines steuerbar veränderlichen Magnetfelds in Form eines Schrittmotors, wobei diesem das Expansionsventil 370 zum Betreiben eines Wärmetauschers 380 zugordnet ist.

Alle der Fluidhandhabungselemente (110A, 110B, 110C) sind derart an der Vorrichtung 100 angeordnet, dass die Rotorachsen (nicht gezeigt) der Fluidhandhabungselemente 110A, 110B, 110C parallel zueinander angeordnet sind. Dies vereinfacht die Fertigung und die Montage der gesamten Vorrichtung 100 erheblich, wobei zusätzlich einzelne Baugruppen einfach getestet und ausgetauscht werden können.

An den zweiten Gehäuseabschnitt 300 sind mehrere Anschlüsse 320A, 320B, 320C, 320D zum Ein- und/ oder Ausströmen von Fluid angeordnet. Die Anschlüsse dienen als Kundenschnittstelle und können je nach Anforderung in Bezug auf den Schlauchdurchmesser und die entsprechenden Positionen variiert werden. Die vorliegende Ausführungsform umfasst insgesamt vier Anschlüsse 320A, 320B, 320C, 320D, welche Fluid seitlich aus dem zweiten Gehäuseabschnitt 300 ausleiten bzw. Fluid seitlich in den zweiten Gehäuseabschnitt 300 einleiten. Ein Anschluss 320D dient der Verbindung mit einem Wärmetauscher 380. Der Wärmetauscher 380 ist dem Mittel 2100 zum Erzeugen eines steuerbar veränderlichen Magnetfelds in Form des Schrittmotors im trockenen ersten Gehäuseabschnitt 200 und das Expansionsventils 370 zugeordnet.

Die Vorrichtung 100 umfasst ferner eine elektrische Steuereinheit 220, welche ebenfalls im trockenen ersten Gehäuseabschnitt 200 angeordnet ist. Die elektrische Steuereinheit 220 ist als flächiger Körper ausgebildet wie es beispielsweise bei Steuerplatinen oder dergleichen üblich ist. Die Steuereinheit 220 ist oberhalb der als Statoren ausgebildeten Mittel zum Erzeugen eines steuerbar veränderlichen Magnetfelds 210A, 210B, 210C, 2100 angeordnet. Die elektrische Steuereinheit 220 ist zur Steuerung der Vorrichtung 100 notwendig. Beispielsweise könnte die Steuereinheit 220 auch zwischen den einzelnen Statoren innerhalb des ersten Gehäuseabschnitts 200, jedoch unmittelbar angrenzend an der fluidisch undurchlässigen Konturwand 150, angeordnet werden. Dies wäre vorteilhaft da die elektrische Steuereinheit 220 zusätzlich gekühlt werden könnte, ohne ein Risiko des unmittelbaren Kontakts mit dem Fluid einzugehen. Zusätzlich könnte mit der Verlustwärme geheizt werden, welche im Betrieb der elektrischen Steuereinheit 220 entsteht.

Der erste Gehäuseabschnitt 200 umfasst ein abnehmbares erstes Abdeckelement 202. Dieses erste Abdeckelement 202 vereinfacht den Zugang zu gesamten Elektronik - wie beispielsweise elektrische Steuereinheit 220 oder die Mittel zum Erzeugen eines steuerbar veränderlichen Magnetfelds 210A, 210B, 210C, 2100 -, welche innerhalb des ersten Gehäuseabschnitts 200 angeordnet ist. Somit kann zu Reparaturzwecken, Inspektionen oder auch zu Testzwecken direkt auf den Trockenbereich und die Bestandteile der Elektronik in der Vorrichtung 100 zugegriffen werden. Zusätzlich umfasst das erste Abdeckelement 202 einen Steckeranschluss 204, welcher als zusätzliche Schnittstelle zum Kunden eingesetzt werden kann. Beispielsweise kann die Vorrichtung 100 mittels einer kundeneigenen Steuereinheit verbunden und betrieben werden.

Entsprechend verfügt der zweite Gehäuseabschnitt 300 auch über ein abnehmbares zweites Abdeckelement 302. Auch dieses zweite Abdeckelement 302 kann zu Reparaturzwecken entfernt werden, wodurch direkt auf alle nasslaufenden Bestandteile der Vorrichtung 100 zugegriffen werden kann. Beispielsweise können auch defekte Bestandteile gewechselt werden, ohne dass direkt die gesamte Vorrichtung 100 aus dem betreffenden Fahrzeug ausgebaut werden muss.

Wie bereits ausgeführt sind der erste Gehäuseabschnitt 200 und der zweite Gehäuseabschnitt 300 durch die fluidisch undurchlässige Konturwand 150 aneinander angrenzend ausgebildet. Die Konturwand 150 ist einstückig ausgebildet. In dieser Ausführungsform sind nahezu alle Fluidhandhabungselemente 110A, 110B, 110C an einer durchgehenden fluidisch undurchlässigen Konturwand 150 angeordnet. Die durchgehende fluidisch undurchlässige Konturwand 150 ist gleichzeitig die Außenwand des zweiten Gehäuseabschnitts 300.

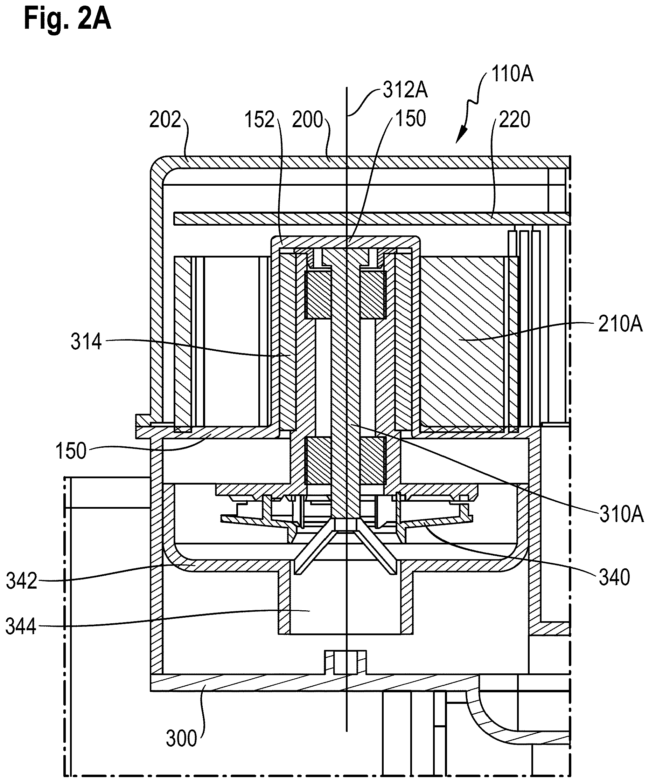

Die Fig. 2A zeigt einen detaillierten Längsschnitt eines Fluidhandhabungselements 110A der Vorrichtung 100. Die Vorrichtung 100 umfasst den ersten Gehäu- seabschnitt 200 und den zweiten Gehäuseabschnitt 300, wobei der erste Gehäuseab- schnitt 200 und der zweite Gehäuseabschnitt 300 durch die fluidisch undurchlässige Kon- turwand 150 aneinander angrenzend ausgebildet sind. Die Konturwand 150 ist gleichzeitig die Außenwand des zweiten Gehäuseabschnitts 300, wodurch die Außenwand identisch ist mit der zum ersten Gehäuseabschnitt 200 orientierten Seite des zweiten Gehäuseabschnitts 300.

Die Konturwand 150 weist auf der zum ersten Gehäuseabschnitt 200 orientierten Seite eine Ausbuchtungen 152 auf. Die Ausbuchtung 152 ist von einem Mittel 210A zum Erzeugen eines steuerbar veränderlichen Magnetfelds in Form eines Stators umgeben und die Ausbuchtung 152 ragt vollständig durch den Innenraum des Stators hindurch, wodurch dieser nahezu vollständig ausgefüllt ist.

Zusätzlich befindet sich innerhalb des ersten Gehäuseabschnitts 200 die elektrische Steuereinheit 220 zum Steuern der Vorrichtung 100. Sie ist oberhalb des Mittels 210A zum Erzeugen eines steuerbar veränderlichen Magnetfelds in Form eines Stators angeordnet. Das Mittel 210A zum Erzeugen eines steuerbar veränderlichen Magnetfelds in Form eines Stators und die elektrische Steuereinheit 220 zum Steuern der Vorrichtung 100 sind von einem ersten Abdeckelement 202 verschlossen und gegen äußere Einflüsse wie Schmutz, Feuchtigkeit oder mechanische Einwirkungen geschützt.

Innerhalb des zweiten Gehäuseabschnitts 300, welcher fluidführend ausgebildet ist, ist ein Mittel 310A welches durch das erzeugte Magnetfeld bewegbar ist, angeordnet. Das Mittel 310A welches durch das erzeugte Magnetfeld bewegbar ist, weist einen Rotor 314 mit einem zugeordneten Magnet auf. Der Rotor 314 ist exakt in die Ausbuchtung 152 der Konturwand 150 eingeführt, wodurch die exakte Ausrichtung zwischen Rotor 314 und Stator gegeben ist. Der Rotor 314 wird durch den Stator in Rotation versetzt, wodurch das das Mittel 310A, welches durch das Magnetfeld bewegbar ist, in Rotation versetzt wird und somit durch den Stator steuerbar ist. Um die Funktion der Rotor-Stator- Anordnung zu verbessern, wird zwischen Rotor 314 und der Ausbuchtung 152 in einer radialen Richtung ein Isolator (nicht gezeigt) angeordnet. Beispielsweise eignet sich hierfür eine ferritische Füllung. Unterhalb des Rotors 314 ist ein Laufrad 340 angeordnet, welches durch Rotation als Pumpe zum Fördern des Fluids genutzt werden kann. Das Laufrad 340 befindet sich innerhalb eine Laufradgehäuses 342, wobei sich am unteren Ende des Laufradgehäuses 342 eine Fluideinströmungsöffnung 344 befindet. Fluid wird also durch die Fluideinströmungsöffnung 344 in das Laufradgehäuses 342 eingeströmt und durch die Rotation des Laufrades 340 in radialer Richtung durch eine Fluidausströmöffnung (nicht gezeigt) ausgeströmt. Das Laufradgehäuse 342 kann hierbei als eigenständiges Bauteil in den zweiten Gehäuseabschnitt 300 eingebracht werden, um in Abhängigkeit der Laufradgröße und/ oder der gewünschten Pumpenleistung variabel zu sein. Der Rotor 314 umfasst eine Rotorachse 312A, bezüglicher welcher das Mittel 310A, welches durch das Magnetfeld bewegbar ist, einschließlich der Rotors 314 und das Laufrad 340 rotationssymmetrisch angeordnet sind.

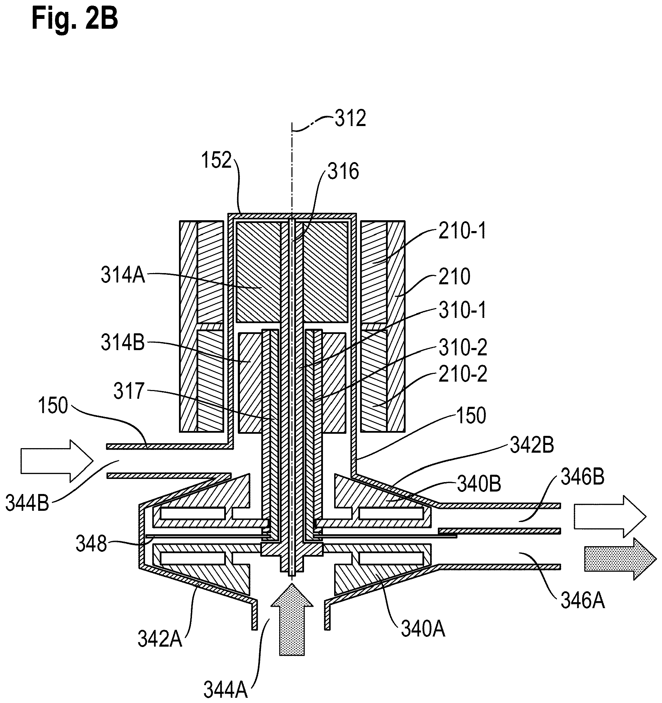

Die Fig. 2B zeigt eine Längsschnittansicht einer alternativen Ausführungsform eines Fluidhandhabungselements 110 der Vorrichtung 100. Auch diese Ausfüh- rungsform umfasst den ersten Gehäuseabschnitt (nicht gezeigt) und den zweiten Gehäu- seabschnitt (nicht gezeigt), wobei der erste Gehäuseabschnitt 200 und der zweite Gehäu- seabschnitt 300 durch die fluidisch undurchlässige Konturwand 150 aneinander angren- zend ausgebildet sind. Die Konturwand 150 weist auf der zum ersten Gehäuseabschnitt 200 orientierten Seite eine Ausbuchtungen 152 auf. Die Ausbuchtung 152 ist von einem Mittel 210 zum Erzeugen eines steuerbar veränderlichen Magnetfelds in Form eines Sta- tors umgeben. Der Stator umfasst einen ersten Stator 210-1 und einen zweiten Stator 210-2. Der erste Stator 210-1 und der zweite Stator 210-2 sind in Richtung der Rotorachse 312 aneinander angrenzend angeordnet.

Innerhalb des zweiten Gehäuseabschnitts 300, welcher fluidführend ausgebildet ist, ist das Mittel, welches durch das erzeugte Magnetfeld bewegbar ist, angeordnet. Das Mittel, welches durch das erzeugte Magnetfeld bewegbar ist, umfasst ein erstes Mittel 310-1, welches durch das erzeugte Magnetfeld bewegbar ist, und ein zweites Mittel 310-2, welches durch das erzeugte Magnetfeld bewegbar ist.

Das erste Mittel 310-1, welches durch das erzeugte Magnetfeld bewegbar ist, ist hierbei dem Magnetfeld des ersten Stators 210-1 zugeordnet und das zweite Mittel 310-2, welches durch das erzeugte Magnetfeld bewegbar ist, ist dem Magnetfeld des zweiten Stators 210-2 zugeordnet.

Weiter umfasst das erste Mittel 310-1, welches durch das erzeugte Magnetfeld des ersten Stators 210-1 bewegbar ist, einen erster Rotor 314A mit einem zugeordneten Magnet.

Entsprechend umfasst das zweite Mittel 310-2, welches durch das erzeugte Magnetfeld des zweiten Stators 210-2 bewegbar ist, einen zweiten Rotor 314B mit einem zugeordneten Magnet.

Beide Rotoren 314A, 314B sind im zweiten Gehäuseabschnitt 300 präzise in die Ausbuchtung 152 der Konturwand 150 eingeführt. Der erste Rotor 314A ist hierbei dem ersten Stator 210-1 zugeordnet. Der erste Rotor 314A wird durch den ersten Stator 210-1 in Rotation versetzt, wodurch das erste Mittel 310-1, welches durch das Magnetfeld des ersten Stators 210-1 bewegbar ist, in Rotation versetzt werden kann und somit durch den ersten Stator 210-1 steuerbar ist.

Der zweite Rotor 314B ist dem zweiten Stator 210-2 zugeordnet. Der zweite Rotor 314B wird durch den zweiten Stator 210-2 in Rotation versetzt, wodurch das zweite Mittel 310-2, welches durch das Magnetfeld des zweiten Stators 210-2 bewegbar ist, in Rotation versetzt werden kann und somit durch den zweiten Stator 210-2 steuerbar ist.

Über eine Rotorwelle 316 ist der erste Rotor 314A mit einem ersten Laufrad 340A verbunden, welches durch Rotation als Pumpe zum Fördern des Fluids genutzt werden kann. Das erste Laufrad 340A befindet sich innerhalb eines Laufradgehäuses 342A, wobei sich am unteren Ende des Laufradgehäuses 342A eine Fluideinströmungsöffnung 344A befindet. Fluid wird also durch die Fluideinströmungsöffnung 344A in das Laufradgehäuse 342A eingeströmt und durch die Rotation des Laufrades 340A in radialer Richtung durch eine Fluidausströmöffnung 346A ausgeströmt.

Der zweite Rotor 314B ist über eine Rotorhohlwelle 317 mit einem zweiten Laufrad 340B verbunden, welches durch Rotation als Pumpe zum Fördern des Fluids genutzt werden kann. Das zweite Laufrad 340B befindet sich innerhalb eines Laufradgehäuses 342B, wobei Fluid über eine seitlich angeordnete Fluideinströmungsöffnung 344B in das Laufradgehäuses 342B eingeströmt wird. Durch die Rotation des Laufrades 340B wird das Fluid in radialer Richtung durch eine Fluidausströmöffnung 346B ausgeströmt.

Das erste Laufradgehäuse 342A und das zweite Laufradgehäuse 342B sind mittels eines Trennelements 348 voneinander getrennt ausgebildet. Die Rotorwelle 316, welche dem ersten Rotor 314A und dem ersten Stator 210-1 zugeordnet ist, erstreckt sich durch die Rotorhohlwelle 317 und durch das zweite Laufradgehäuse 342B hindurch. Beispielsweise kann die Rotorhohlwelle 317 unmittelbar an dem Trennelement 348 fixiert werden.

Das erste Laufrad 340A kann durch gezieltes Ansteuern des ersten Stators 210-1 durch die elektrische Steuereinheit 220 (nicht gezeigt) betrieben werden. Das zweite Laufrad 340B kann unabhängig von dem ersten Laufrad 340A durch gezieltes Ansteuern des zweiten Stators 210-2 betrieben werden. Hierbei umfassen die Rotoren 314A, 314B eine gemeinsame Rotorachse 312, bezüglicher welcher sowohl das erste Mittel 310-1, welches durch das erzeugte Magnetfeld des ersten Stators 210-1 bewegbar ist, als auch das zweite Mittel 310-2, welches durch das erzeugte Magnetfeld des zweiten Stators 210-2 bewegbar ist, rotationssymmetrische angeordnet sind.

Somit können in einem kompakten Gehäuse zwei verschieden Fluidpumpen angeordnet und betrieben werden. Dadurch ergibt sich der zusätzliche Vorteil, dass zwei unterschiedliche Fluidkreisläufe getrennt voneinander in der Vorrichtung 100 gefördert werden können. Durch die Trennung des Stators 210 in einen ersten Stator 210-1 und einen zweiten Stator 210-2, können die beiden Pumpen mit unterschiedlicher und voneinander abweichender Drehzahl gesteuert werden. Somit ergibt sich ein hohes Maß an Flexibilität und es ist möglich unterschiedliche Betriebsmodi in getrennten Fluidkreisläufen zu verfolgen, ohne irgendwelche Abhängigkeiten oder Einflüsse zwischen den Fluidkreisläufen zu berücksichtigen.

Um die Funktion der Vorrichtung 100 zu verbessern, kann zwischen dem ersten Rotor 314A und der fluidundurchlässigen Konturwand 150 in einer radialen Richtung ein Isolator (nicht gezeigt) angeordnet sein. Entsprechend kann zwischen dem zweiten Rotor 314B und der fluidundurchlässigen Konturwand 150 in einer radialen Richtung ein Isolator (nicht gezeigt) angeordnet sein. Beispielsweise eignet sich hierfür eine ferritische Füllung.

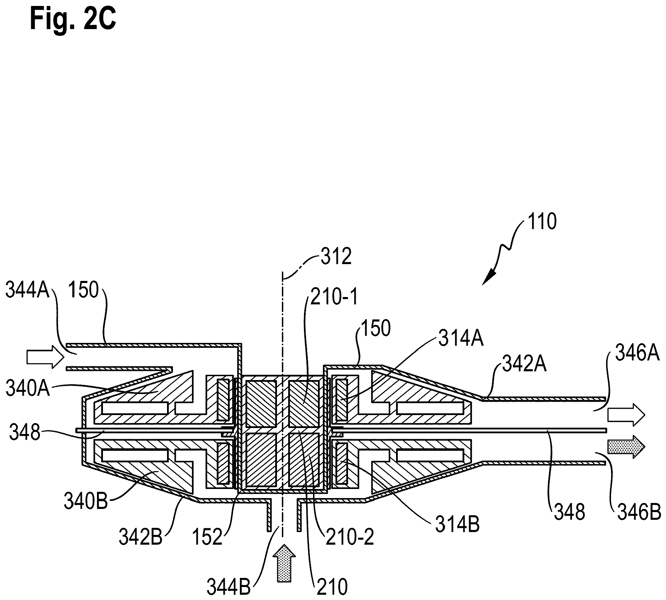

Die Fig. 2C zeigt einen detaillierten Längsschnitt eines Fluidhandhabungselements 110 der Vorrichtung 100 nach einer weiteren Ausführungsform. Auch diese Ausführungsform umfasst den ersten Gehäuseabschnitt (nicht gezeigt) und den zweiten Gehäuseabschnitt (nicht gezeigt), wobei der erste Gehäuseabschnitt 200 und der zweite Gehäuseabschnitt 300 durch die fluidisch undurchlässige Konturwand 150 aneinander angrenzend ausgebildet sind. Die Konturwand 150 weist auf der zum zweiten Gehäuseabschnitt 300 orientierten Seite eine Ausbuchtungen 152 auf. In die Ausbuchtung 152 ist ein Mittel 210 zum Erzeugen eines steuerbar veränderlichen Magnetfelds in Form eines Stators eingebracht. Der Stator umfasst einen ersten Stator 210-1 und einen zweiten Stator 210-2. Der erste Stator 210-1 und der zweite Stator 210-2 sind in Richtung der Rotorachse 312 aneinander angrenzend angeordnet.

In dem zweiten Gehäuseabschnitt 300, welcher fluidführend ausgebildet ist, ist das Mittel, welches durch das erzeugte Magnetfeld bewegbar ist, angeordnet. Das Mittel, welches durch das erzeugte Magnetfeld bewegbar ist, umfasst einen ersten Rotor 314A und einen zweiten Rotor 314B.

Der erste Rotor 314A ist hierbei dem Magnetfeld des ersten Stators 210-1 zugeordnet und der zweite Rotor 314B, ist dem Magnetfeld des zweiten Stators 210-2 zugeordnet.

Beide Rotoren 314A, 314B sind im zweiten Gehäuseabschnitt 300 um die Ausbuchtung 152 der Konturwand 150 herum angeordnet. Der erste Rotor 314A ist hierbei dem ersten Stator 210-1 zugeordnet und wird durch den ersten Stator 210-1 in Rotation versetzt und ist somit durch den ersten Stator 210-1 steuerbar.

Der erste Rotor 314A ist mit einem ersten Laufrad 340A verbunden, welches durch Rotation als Pumpe zum Fördern des Fluids genutzt werden kann. Das erste Laufrad 340A ist radial außerhalb des ersten Rotors 314A angeordnet und befindet sich innerhalb eines Laufradgehäuses 342A.

Über eine seitlich angeordnete Fluideinströmungsöffnung 344A wird Fluid in das Laufradgehäuses 342A eingeströmt und durch die Rotation des Laufrades 340A in radialer Richtung durch eine Fluidausströmöffnung 346A ausgeströmt.

Der zweite Rotor 314B ist dem zweiten Stator 210-2 zugeordnet. Der zweite Rotor 314B wird durch den zweiten Stator 210-2 in Rotation versetzt und ist somit durch den zweiten Stator 210-2 steuerbar.

Der zweite Rotor 314B ist mit einem zweiten Laufrad 340B verbunden, welches durch Rotation als Pumpe zum Fördern des Fluids genutzt werden kann. Das zweite Laufrad 340B befindet sich radial außerhalb des zweiten Rotors 314B und ist in einem Laufradgehäuse 342B angeordnet. Fluid wird von unten über eine Fluideinströmungsöffnung 344B in das Laufradgehäuses 342B eingeströmt. Durch die Rotation des Laufrades 340B wird das Fluid in radialer Richtung durch eine Fluidausströmöffnung 346B ausgeströmt.

Das erste Laufradgehäuse 342A und das zweite Laufradgehäuse 342B sind mittels eines Trennelements 348 voneinander getrennt ausgebildet. Beispielsweise ist das Trennelement 348 radial außenliegend an der Ausbuchtung 152 der Konturwand 150 angeordnet und die Ausbuchtung 152 weist hierfür ausgebildete Halterungen auf.

Das erste Laufrad 340A kann durch gezieltes Ansteuern des ersten Stators 210-1 durch die elektrische Steuereinheit 220 (nicht gezeigt) betrieben werden. Das zweite Laufrad 340B kann unabhängig von dem ersten Laufrad 340A durch gezieltes Ansteuern des zweiten Stators 210-2 betrieben werden. Hierbei umfassen die Rotoren 314A, 314B eine gemeinsame Rotorachse 312, bezüglicher welcher sowohl der erste Stator 210-1 und der zweite Stator 210-2, als auch das erste Laufrad 340A und das zweite Laufrad 340B rotationssymmetrisch angeordnet sind.

Somit können in einem kompakten Gehäuse zwei verschieden Fluidpumpen angeordnet und betrieben werden. Dadurch ergibt sich der zusätzliche Vorteil, dass zwei unterschiedliche Fluidkreisläufe getrennt voneinander in der Vorrichtung 100 gefördert werden können. Durch die Trennung des Stators 210 in einen ersten Stator 210-1 und einen zweiten Stator 210-2, können die beiden Pumpen mit unterschiedlicher und voneinander abweichender Drehzahl gesteuert werden. Somit ergibt sich ein hohes Maß an Flexibilität und es ist möglich unterschiedliche Betriebsmodi in getrennten Fluidkreisläufen zu verfolgen, ohne irgendwelche Abhängigkeiten oder Einflüsse zwischen den Fluidkreisläufen zu berücksichtigen. Im Unterschied zur Ausführungsform der Figur 2B benötigt das Fluidhandhabungselement 110 dieser Ausführungsform deutlich weniger axialen Bauraum. Dies ist der Ausbildung als Außenläufer geschuldet. Die Statoren sind innerhalb der Rotoren angeordnet und die zugeordneten Laufräder befinden sich zudem radial außerhalb der Rotoren. Dadurch vergrößert sich der Außendurchmesser dieser Ausführungsform eines Fluidhandhabungselements deutlich, wodurch insgesamt eine höhere Laufruhe und eine größere Toleranz in Bezug auf Druckwellen erreicht werden kann. Der innenliegende Stator hingegen kann kleiner ausgebildet werden, was die Herstellungskosten reduziert. In einer weiteren Ausführungsform wäre es ebenfalls denkbar, die Außenläufer-Anordnung mit nur einem Stator und nur einem zugeordneten Rotor zu realisieren.

Um die Funktion der Vorrichtung 100 zu verbessern, kann zwischen dem ersten Rotor 314A und der fluidundurchlässigen Konturwand 150 ein Isolator (nicht gezeigt) angeordnet sein. Entsprechend kann zwischen dem zweiten Rotor 314B und der fluidundurchlässigen Konturwand 150 ein Isolator (nicht gezeigt) angeordnet sein. Beispielsweise eignet sich hierfür ein ferritisches Material.

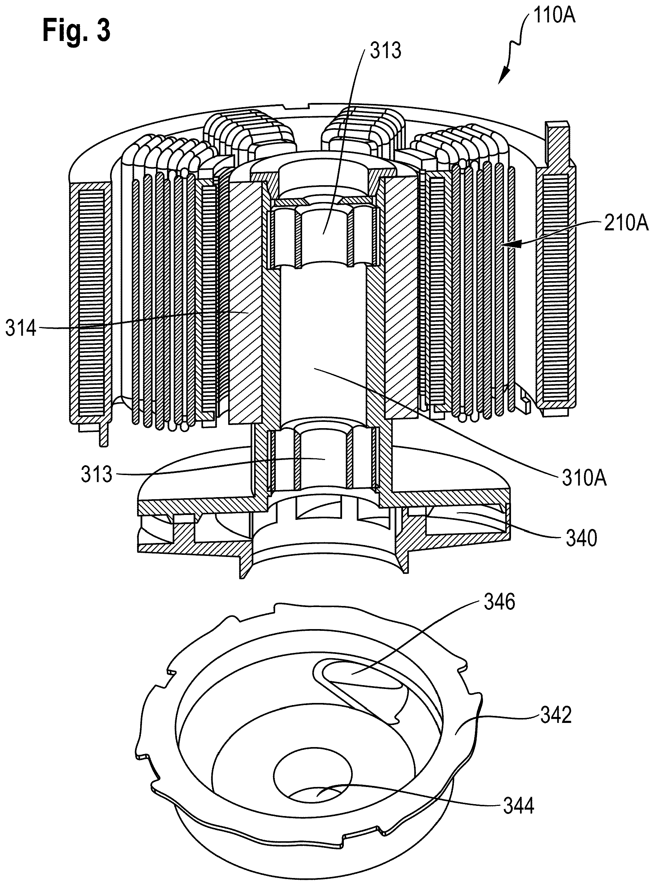

Die Fig. 3 zeigt eine Längsschnittansicht eines Fluidhandhabungselements 110A der erfindungsgemäßen Vorrichtung 100. In dem ersten Gehäuseabschnitt (nicht gezeigt) befindet sich das Mittel 210A zum Erzeugen eines steuerbar veränderlichen Magnetfelds in Form eines Stators. Getrennt von der Konturwand (nicht gezeigt) und somit im angrenzenden zweiten Gehäuseabschnitt 300 (nicht gezeigt) ist das Mittel 310A, welches durch das Magnetfeld bewegbar ausgebildet ist, in Form eines Rotors 314 angeordnet. Der Rotor 314 ist in radialer Richtung von einem Isolator (nicht gezeigt) umgeben. Der Rotor 314 umfasst zusätzlich zwei Lagerstellen 313, welche zur Aufnahme Rotorachse ausgebildet sind. An einem unteren Abschnitt des Rotors 314 befindet sich das Laufrad 340 zum radialen Ausströmen von Fluid.

Unterhalb des Laufrades 340 befindet sich das Laufradgehäuse 342, in einer perspektivischen Darstellung. Das Laufradgehäuse 342 zeigt die Fluideinströmöffnung 344, welche mittig in einem Bodenstück des Laufradgehäuses 342 angeordnet ist. Zusätzlich umfasst das Laufradgehäuse 342 eine Fluidausströmöffnung 346, welche in einer seitlichen Wandung angeordnet ist. Fluid wird durch die Fluideinströmungsöffnung 344 in das Laufradgehäuses 342 eingeströmt und durch die Rotation des Laufrades 340 in radialer Richtung durch die Fluidausströmöffnung 346 ausgeströmt. Hierdurch entsteht die Pumpwirkung des Fluidhandhabungselements 110A.

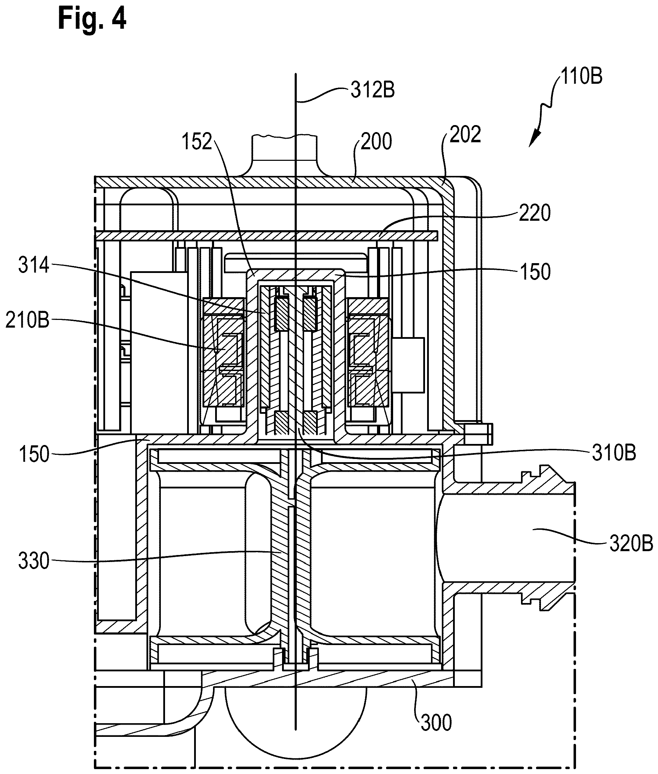

Die Fig. 4 zeigt einen detaillierten Längsschnitt eines weiteren Fluidhandhabungselements 110B der Vorrichtung 100. Die Vorrichtung 100 umfasst den ersten Gehäuseabschnitt 200 und den zweiten Gehäuseabschnitt 300, wobei der erste Gehäuseabschnitt 200 und der zweite Gehäuseabschnitt 300 durch die fluidisch undurchlässige Konturwand 150 aneinander angrenzend ausgebildet sind. Die Konturwand 150 ist gleichzeitig die Außenwand des zweiten Gehäuseabschnitts 300, wodurch die Außenwand identisch ist mit der zum ersten Gehäuseabschnitt 200 orientierten Seite des zweiten Gehäuseabschnitts 300.

Die Konturwand 150 weist auf der zum ersten Gehäuseabschnitt 200 orientierten Seite eine Ausbuchtung 152 auf. Die Ausbuchtung 152 ist von einem Mittel 210B zum Erzeugen eines steuerbar veränderlichen Magnetfelds in Form eines Stators umgeben und die Ausbuchtung 152 ragt vollständig durch den Innenraum des Stators hindurch, wodurch dieser nahezu vollständig ausgefüllt ist.

Zusätzlich befindet sich innerhalb des ersten Gehäuseabschnitts 200 die elektrische Steuereinheit 220 zum Steuern der Vorrichtung 100. Sie ist oberhalb des Mittels 210B zum Erzeugen eines steuerbar veränderlichen Magnetfelds in Form eines Stators angeordnet. Das Mittel 210B zum Erzeugen eines steuerbar veränderlichen Magnetfelds in Form eines Stators und die elektrische Steuereinheit 220 zum Steuern der Vorrichtung 100 sind von einem ersten Abdeckelement 202 verschlossen und gegen äußere Einflüsse wie Schmutz, Feuchtigkeit oder mechanische Einwirkungen geschützt.

Innerhalb des zweiten Gehäuseabschnitts 300, welcher fluidführend ausgebildet ist, ist ein Mittel 310B welches durch das erzeugte Magnetfeld bewegbar ist, angeordnet. Das Mittel 310B welches durch das erzeugte Magnetfeld bewegbar ist, weist einen Rotor 314 mit einem zugeordneten Magnet auf. Der Rotor 314 ist exakt in die Ausbuchtung 152 der Konturwand 150 eingeführt, wodurch die exakte Ausrichtung zwischen Rotor 314 und Stator gegeben ist. Der Rotor 314 wird durch den Stator in Rotation versetzt, wodurch das das Mittel 310B, welches durch das Magnetfeld bewegbar in Rotation versetzt werden kann und somit durch den Stator steuerbar ist. Um die Funktion der Rotor-Stator- Anordnung zu verbessern, wird zwischen Rotor 314 und der Ausbuchtung 152 in einer radialen Richtung ein Isolator (nicht gezeigt) angeordnet. Beispielsweise eignet sich hierfür eine ferritische Füllung. Unterhalb des Rotors 314 ist ein Schaltelement 330 angeordnet. Das Schaltelement kann als Drehschieber ausgebildet werden kann, wodurch in Abhängigkeit der konkreten Position des Drehschiebers Fluid umgeleitet werden kann. Das Umleiten von Fluid ermöglicht eine Vielzahl von Anschlüssen und Schaltmodi innerhalb der Vorrichtung 100. Dies macht die Vorrichtung 100 bzw. das Fluidhandhabungselement 110B an verschiedene Fahrzeuge und die entsprechende gewünschte Funktion adaptierbar. Seitlich von dem Schaltelement 330 ist ein Anschluss 320B angeordnet, welcher zum Ein- und/ oder Ausströmen von Fluid ausgebildet ist. Das Fluidhandhabungselement 110B umfasst eine Rotorachse 312B, bezüglicher welcher das Mittel 310B, welches durch das Magnetfeld bewegbar ist, der Rotor 314 und das Schaltelement 330 rotationssymmetrisch angeordnet sind.

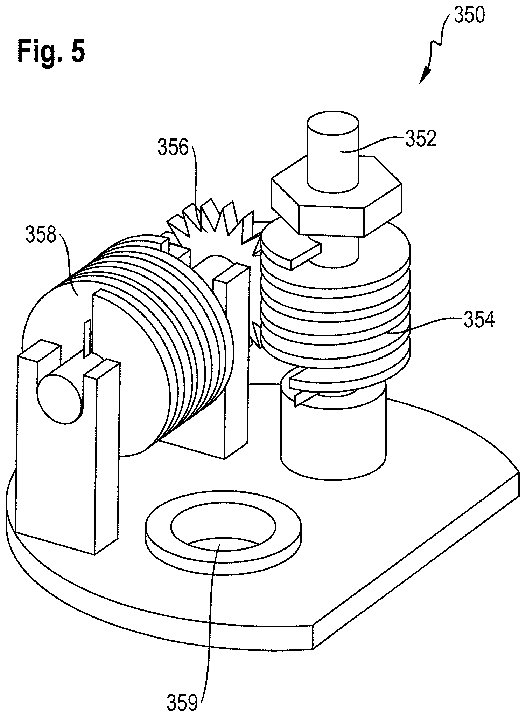

Die Fig. 5 zeigt eine schematische Darstellung eines nasslaufenden Getriebes 350 der erfindungsgemäßen Vorrichtung 100. Das nasslaufende Getriebe 350 umfasst eine Antriebselement 352, welches das Drehmoment des Rotors aufnimmt. Durch das Drehmoment wird über das Antriebselement 352 eine Antriebsschnecke 354 in Rotation versetzt. Ein seitlich angeordnetes Zahnrad 356 koppelt eine zugeordnete Getriebestufe 358. Unmittelbar an die Getriebestufe 358 befindet sich eine Drehschieberöffnung 359. Durch die Drehschieberöffnung 359 ragt im montierten Zustand ein Abtriebselement des Drehschiebers (nicht gezeigt) hindurch, und greift direkt in die Getriebestufe 358 des nasslaufenden Getriebes 350 ein. Dadurch wird die exakte Position des als Drehschieber ausgebildeten Schaltelements 330 steuerbar. Durch die vorherrschende Selbsthemmung des nasslaufenden Getriebes 350, ist keine Kraft (magnetisch oder elektrisch) notwendig, um den Drehschieber in Position zu halten. Dies bringt beispielsweise im proportionalen Betrieb erhebliche Vorteile mit sich. Mit diesem nasslaufenden Getriebe 350 können beliebig viele Getriebestufen 358 gekoppelt werden um letztlich die Position des gekoppelten Schaltelements 330 ausgehend von dem durch die elektrische Steuereinheit 220 angesteuerten Stators zu bestimmen. Das nasslaufende Getriebe 350 ist direkt im Fluid und somit in dem zweiten Gehäuseabschnitt 300 angeordnet. Hierdurch werden keine dynamischen Dichtungen benötigt. Die notwendige Schmierung des nasslaufenden Getriebes 350 erfolgt direkt über das Kühlfluid und die entstehende Verlustwärme durch Reibung wird direkt in das Kühlfluid abgegeben.

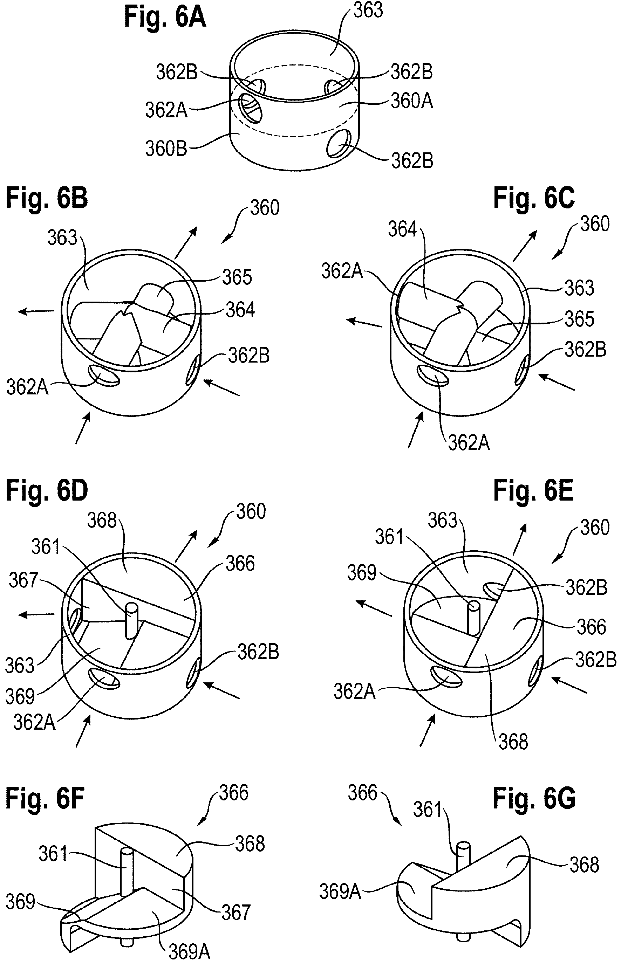

Die Figuren 6A bis 6G zeigen mehrere schematische Darstellungen einer doppelten Drehschieberanordnung 360 der Vorrichtung 100. Einfache Drehschieber- anordnungen weisen sogenannte 2 x 90° Umlenkungen auf. Diese 2 x 90° Umlenkungen weisen den Nachteil auf, dass Kanäle nicht über zwei verschiedene Ebenen hinweg mitei- nander verbunden werden können. Die doppelte Drehschieberanord- nung 360 umfasst eine erste Ebene 360A und eine zweiten Ebene 360B. Der Vorteil die- ser doppelten Drehschieberanordnung 360 ist, dass mit nur einer Drehschieberanordnung zwei Drehschieber gleichzeitig betrieben werden. Man spart sich somit ein weiteres Fluidhandhabungselement 110B bzw. einen zusätzlichen Drehschieber, welcher mit einer zusätzlichen Stator-Rotor-Anordnung betrieben werden muss.

Die Figur 6A zeigt eine schematische Darstellung einer Drehschieberwandung 363 einer doppelten Drehschieberanordnung 360. Die Drehschieberwandung 363 ist Teil des Gehäuses, welches den Drehschieber- in dieser Ausführungsform mit oberem und unterem Kanalverbindungselement 364, 365 - aufnimmt. Die Drehschieberwandung 363 weist mehrere Ein- und Ausströmöffnungen 362A, 362B auf, welche entweder in der ersten Ebene 360A oder in der zweiten Ebene 360B angeordnet sind. Hierbei befindet sich auf der oberen ersten Ebene 360A lediglich eine obere Ein- und Ausströmöffnung 362A, während sich auf der unteren zweiten Ebene 360B drei untere Ein- und Ausströmöffnung 362B befinden. Die Ein- und Ausströmöffnungen 362A, 362B sind um den gesamten Um- fang der Drehschieberwandung 363 herum mit jeweils 90° Abstand zueinander angeord- net.

Die Figur 6B zeigt eine schematische Darstellung einer doppelten Drehschieberanordnung 360. Die Drehschieberwandung 363 weist die obere ersten Ebene 360A mit einer oberen Ein- und Ausströmöffnung 362A und die untere zweite Ebene 360B mit insgesamt drei unteren Ein- und Ausströmöffnungen 362B auf. Innerhalb der Drehschieberwandung 363 befindet sich ein oberes Kanalverbindungselement 364 und ein unteres Kanalverbindungselement 365. Die beiden Kanalverbindungselemente 364, 365 sind relativ zu der Drehschieberwandung 363 verdrehbar angeordnet. Hierbei sind das obere Kanalverbindungselement 364 und das untere Kanalverbindungselement 365 jedoch nicht relativ zueinander verdrehbar. Sie bilden also ein gemeinsames Kanalverbindungselement aus.

Das obere Kanalverbindungselement 364 ist in der Draufsicht T-förmig mit insgesamt drei Kanalarmen ausgebildet. Zwei der drei Kanalarme liegen in der ersten Ebene 360A und einer der drei Kanalarme erstreckt sich in die zweite Ebene 360B. Durch diese Anordnung lässt sich das obere Kanalverbindungselement 364 relativ zu der Drehschieberwandung 363 so ausrichten, dass die obere Ein- und Ausströmöffnung 362A der ersten Ebene 360A mit einer unteren Ein- und Ausströmöffnung 362B verbunden wird. Somit kann Fluid über die obere Ein- und Ausströmöffnung 362A in die doppelte Drehschieberanordnung 360 einströmen und aus der unteren Ein- und Ausströmöffnung 362B ausströmen oder umgekehrt. Einer der drei Kanalarme bleibt hierbei ungenutzt und endet ohne Ein- und Ausströmöffnung blind an der Drehschieberwandung 363.

Das untere Kanalverbindungselement 365 ist wie das obere Kanalverbindungselement 364 in der Draufsicht T-förmig mit insgesamt drei Kanalarmen ausgebildet. Im Unterschied zu dem oberen Kanalverbindungselement 364 befindet sich alle drei Kanalarme in einer Ebene, der zweiten Ebene 360B. In der vorliegenden Anordnung verbinden zwei der drei Kanalarme zwei untere Ein- und Ausströmöffnungen 362B in einem Winkel von 90° miteinander. Der dritte Kanalarm bleibt ungenutzt und endet ohne Ein- und Ausströmöffnung blind an der Drehschieberwandung 363.

Die Figur 6C zeigt die doppelten Drehschieberanordnung 360 gemäß der Figur 6B in einer anderen Anordnung. Die Drehschieberwandung 363 weist die obere erste Ebene 360A mit der oberen Ein- und Ausströmöffnung 362A und die untere zweite Ebene 360B mit insgesamt drei unteren Ein- und Ausströmöffnungen 362B auf. Innerhalb der Drehschieberwandung 363 befindet sich ein oberes Kanalverbindungselement 364 und ein unteres Kanalverbindungselement 365. Das obere Kanalverbindungselement 364 ist in der Draufsicht T-förmig mit drei Kanalarmen ausgebildet, wobei zwei der drei Kanalarme in der ersten Ebene 360A liegen und einer der drei Kanalarme sich in die zweite Ebene 360B erstreckt. Das untere Kanalverbindungselement 365 ist wie das obere Kanalverbindungselement 364 in der Draufsicht T-förmig mit drei Kanalarmen ausgebildet. Im Unterschied zu dem oberen Kanalverbindungselement 364 befinden sich alle drei Kanalarme in einer Ebene, der zweiten Ebene 360B.

In der vorliegenden Anordnung befinden sich die beiden Kanalverbindungselemente 364, 365 im Vergleich zur Anordnung der Figur 6B in einer relativ zu der Drehschieberwandung 363 um 90° verdrehten Anordnung.

Durch diese Anordnung ist das obere Kanalverbindungselement 364 relativ zu der Drehschieberwandung 363 so ausgerichtet, dass die obere Ein- und Ausströmöffnung 362A der ersten Ebene 360A mit einer anderen unteren Ein- und Ausströmöffnung 362B, dieje- nige Ein- und Ausströmöffnung 362B, welche der oberen Ein- und Ausströmöffnung 362A gegenüberliegt, verbunden ist. Somit kann Fluid über die obere Ein- und Ausströmöffnung 362A in die doppelte Drehschieberanordnung 360 einströmen und aus einer anderen unteren Ein- und Ausströmöffnung 362B ausströmen oder umgekehrt. Der dritte Kanalarm bleibt hierbei ungenutzt und endet ohne Ein- und Ausströmöffnung blind an der Drehschieberwandung 363.

In der vorliegenden Anordnung ist das untere Kanalverbindungselement 365 relativ zu der Drehschieberwandung 363 so ausgerichtet, dass zwei andere untere Ein- und Ausströmöffnungen 362B in einem Winkel von 180° miteinander verbunden werden.

Somit kann Fluid über die untere Ein- und Ausströmöffnung 362B in die doppelte Drehschieberanordnung 360 einströmen und aus einer gegenüberliegenden unteren Ein- und Ausströmöffnung 362B ausströmen oder umgekehrt. Der dritte Kanalarm bleibt ungenutzt und endet ohne Ein- und Ausströmöffnung blind an der Drehschieberwandung 363.

Die Fig. 6D zeigt eine alternative Ausführungsform einer doppelten Drehschieberanordnung 360. Auch diese doppelte Drehschieberanordnung 360 umfasst eine erste Ebene 360A und eine zweiten Ebene 360B. Auch diese Ausführungsform kann mit nur einer Drehschieberanordnung zwei Drehschieber gleichzeitig betreiben. Man spart sich somit auch hier ein weiteres Fluidhandhabungselement 110B bzw. einen zusätzlichen Drehschieber, welcher mit einer zusätzlichen Stator-Rotor-Anordnung betrieben werden muss.

Diese doppelte Drehschieberanordnung 360 umfasst eine mit den vorausgehenden Figuren identische Drehschieberwandung 363 auf. Die Drehschieberwandung 363 weist mehrere Ein- und Ausströmöffnungen 362A, 362B auf, wobei sich auf der oberen ersten Ebene 360A lediglich eine obere Ein- und Ausströmöffnung 362A befindet, während sich auf der unteren zweiten Ebene 360B drei untere Ein- und Ausströmöffnung 362B befinden. Die Ein- und Ausströmöffnungen 362A, 362B sind um den gesamten Umfang der Drehschieberwandung 363 herum mit jeweils 90° Abstand zueinander angeordnet.

Innerhalb der Drehschieberwandung 363 befindet sich ein Stellelement 366, welches um eine Zentralachse 361 rotierbar angeordnet ist. Das Stellelement 366 trennt einen Innenraum, welcher durch die Drehschieberwandung 363 in radialer Richtung und durch zwei stirnseitige Ebenen, welche die Drehschieberwandung 363 axial begrenzen, definiert ist, in einen ersten Teilraum und einen zweiten Teilraum auf. Diese Trennung erfolgt durch mehrere Flächen, welche durch gezielte Anordnung eine identische Funktion erfüllen, wie im Fall der Ausführungsformen der Figuren 6B und 6C. Das Stellelement 366 umfasst eine Längsebene 367 welche parallel zur Zentralachse 361 angeordnet, jedoch von dieser beabstandet ist. Das Ausmaß der Beabstandung der Längsebene 367 von der Zentralachse 361, hängt von dem Durchmesser der oberen und der unteren Ein- und Ausströmöffnungen 362A, 362B ab, da das Einströmen und das Ausströmen von Fluid durch die oberen und der unteren Ein- und Ausströmöffnungen 362A, 362B ohne Einschränkungen erfolgen soll. Die Längsebene 367 muss somit eine Beabstandung zur Zentralachse 361 aufweisen, welche in etwa der Hälfte des Durchmessers der jeweiligen Ein- und Ausströmöffnungen 362A, 362B entspricht. Die Längsebene 367 wird an einem stirnseitigen Ende der Drehschieberwandung 363, welches die erste Ebene 360A der doppelten Drehschieberanordnung 360 stirnseitig nach außen begrenzt, mit einer äußere Flachebene 368 fortgesetzt. Die äußere Flachebene 368 ist orthogonal zur Zentralachse 361 angeordnet und schließt radial direkt an die Drehschieberwandung 363 an. Zusätzlich weist das Stellelement 366 eine Schrägebene 369 auf, welche zumindest zwischen der oberen Ein- und Ausströmöffnung 362A und einer um 90° versetzten unteren Ein- und Ausströmöffnung 362B eine fluidische Verbindung ermöglicht. Die Schrägebene 369 schneidet die Zentralachse 361 und die Längsebene 367. Der erste Teilraum wird somit durch eine stirnseitige Ebene, welche die Drehschieberwandung 363 axial begrenzt und die äußere Flachebene 368 beinhaltet, die Schrägebene 369 und die Längsebene 367 definiert. Der erste Teilraum befindet sich sozusagen zumindest größtenteils oberhalb des Stellelements 366, wenn das Stellelement 366 in die doppelte Drehschieberanordnung 360 eingebracht ist. Der zweite Teilraum liegt entsprechend zumindest teilweise unterhalb der äußeren Flachebene 368 und der Schrägebene 369.

Das Stellelement 366 lässt sich in der Drehschieberwandung 363 so ausrichten, dass die obere Ein- und Ausströmöffnung 362A der ersten Ebene 360A mit einer unteren Ein- und Ausströmöffnung 362B fluidisch verbunden wird. Somit kann Fluid über die obere Ein- und Ausströmöffnung 362A in die doppelte Drehschieberanordnung 360 einströmen und aus der unteren Ein- und Ausströmöffnung 362B ausströmen oder umgekehrt. Mit anderen Worten kann das Fluid beim Durchströmen des ersten Teilraums die Ebenen 360A, 360B wechseln.

In dieser Anordnung des Stellelements 366 werden durch den zweiten Teilraum unterhalb des Stellelements 366 zwei untere Ein- und Ausströmöffnungen 362B in einem Winkel von 90° miteinander fluidisch verbunden. Das Fluid bleibt somit vom Einströmen in die doppelte Drehschieberanordnung 360, dem Umleiten um 90°, bis hin zum Ausströmen aus der doppelten Drehschieberanordnung 360 in der zweiten Ebene 360B.

Die Figur 6E zeigt die doppelten Drehschieberanordnung 360 gemäß der Figur 6D in einer anderen Anordnung. Die Drehschieberwandung 363 weist die obere ersten Ebene 360A mit oberen Ein- und Ausströmöffnung 362A und die untere zweite Ebene 360B mit insgesamt drei unteren Ein- und Ausströmöffnung 362B auf. Innerhalb der Drehschieberwandung 363 befindet sich das Stellelement 366. In der vorliegenden Anordnung befindet sich das Stellelement 366 im Vergleich zur Anordnung der Figur 6D in einer relativ zu der Drehschieberwandung 363 um 90° verdrehten Anordnung.

Das Stellelement 366 ist in der Drehschieberwandung 363 so ausgerichtet, dass die obere Ein- und Ausströmöffnung 362A der ersten Ebene 360A mit einer anderen unteren Ein- und Ausströmöffnung 362B, welche der oberen Ein- und Ausströmöffnung 362A gegenüberliegt, fluidisch verbunden ist. Somit kann Fluid über die obere Ein- und Ausströmöffnung 362A in die doppelte Drehschieberanordnung 360 einströmen und aus der anderen unteren Ein- und Ausströmöffnung 362B ausströmen oder umgekehrt.

In dieser Anordnung des Stellelements 366 werden durch den zweiten Teilraum unterhalb des Stellelements 366 zwei andere untere Ein- und Ausströmöffnungen 362B, welche einander gegenüberliegend angeordnet sind, miteinander fluidisch verbunden. Im Unterschied zur Anordnung gemäß der Figur 6D wird das Fluid in der gleichen Richtung aus der doppelten Drehschieberanordnung 360 ein- und ausgeströmt. Ebenfalls bleibt das Fluid vom Einströmen in die doppelten Drehschieberanordnung 360 bis hin zum Ausströ- men aus der doppelten Drehschieberanordnung 360 in der zweiten Ebene 360B.

Die Fig. 6F zeigt das Stellelement 366 mit der Zentralachse 361, der Schrägebene 369, der Längsebene 367 und der Flachebene 368 in einer perspektivischen Darstellung. Zusätzlich umfasst das Stellelement 366 eine kurze Einströmebene 369A, welche die Schrägebene 369 in einem oberen Abschnitt abflacht. Die Zentralachse 361 verfügt über einen oberen Abschnitt, welcher zur Anbindung an das nasslaufende Getriebe (nicht gezeigt), und einen unteren Abschnitt, welcher zur Lagerung des Stellelements 366, geeignet ist.

Die Fig. 6G zeigt das Stellelement 366 gemäß der Figur 6F in einer alternativen perspektivischen Darstellung.

Derartige Stellelemente 366 werden meist im Spritzgussverfahren hergestellt. Es ist weniger komplex aufgebaut als beispielsweise eine verzweigte Kanalanordnung. Das Spritzgusswerkzeug kann als einfaches "auf/zu" - Werkzeug ausgebildet werden, wodurch zusätzliche Seitenschieber entfallen. Dies reduziert die Planungs-, Wartungs- und Fertigungskosten des Stellelements 366.

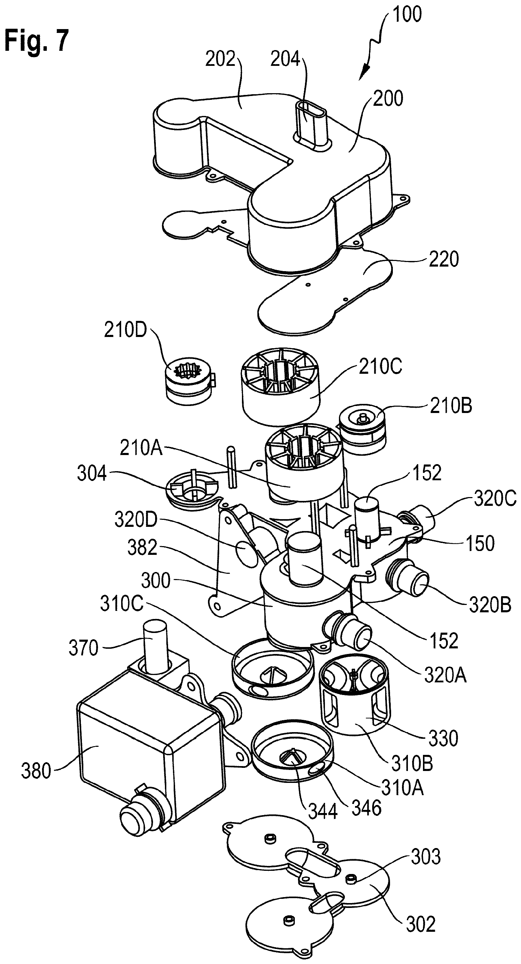

Die Fig. 7 zeigt eine Explosionsdarstellung einer Vorrichtung 100 zur Handhabung von Fluid nach einer weiteren Ausführungsform. Die Vorrichtung 100 um- fasst den ersten Gehäuseabschnitt 200 und den zweiten Gehäuseabschnitt 300, wobei der erste Gehäuseabschnitt 200 und der zweite Gehäuseabschnitt 300 durch die fluidisch undurchlässige Konturwand 150 aneinander angrenzend ausgebildet sind. Die Konturwand 150 ist einstückig ausgebildet. In dieser Ausführungsform ist die Konturwand 150 gleichzeitig die Außenwand des zweiten Gehäuseabschnitts 300, wodurch die Außenwand identisch ist mit der zum ersten Gehäuseabschnitt 200 orientierten Seite des zweiten Gehäuseabschnitts 300.

Die Konturwand 150 weist auf der zum ersten Gehäuseabschnitt 200 orientierten Seite die zylinderförmigen Ausbuchtungen 152 auf. Auf diese zylinderförmige Ausbuchtungen 152 sind Mittel 210A, 210B, 210C zum Erzeugen eines steuerbar veränderlichen Magnetfelds in Form von Statoren aufgebracht. Die zylinderförmigen Ausbuchtungen 152 ragen jeweils in den Innenraum jedes angeordneten Stators hinein und füllen diesen Innenraum vollständig aus. Die Mittel 210A, 210B, 210C, 210D zum Erzeugen eines steuerbar veränderlichen Magnetfelds sind in der vorliegenden Ausführungsform als Statoren von Schrittmotoren ausgebildet.

Auf der zum zweiten Gehäuseabschnitt 300 orientierten Seite (nicht gezeigt) der Konturwand 150 befinden sich Mittel 310A, 310B, 310C, welche durch das erzeugte Magnetfeld der jeweils zugeordneten Mittel 210A, 210B, 210C zum Erzeugen eines steuerbar veränderlichen Magnetfelds, bewegbar ausgebildet sind. Die Mittel 310A, 310B, 310C, welche durch das erzeugte Magnetfeld bewegbar ausgebildet sind, weisen jeweils einen Rotor mit einem zugeordneten Magnet auf (nicht gezeigt). Der Rotor wird durch den Stator in Rotation versetzt, wodurch die Mittel 310A, 310B, 310C welche durch das Magnetfeld bewegbar ausgebildet sind durch den Stator steuerbar sind. Die Mittel 310A, 310B, 310C, welche durch das erzeugte Magnetfeld bewegbar sind, sind jeweils Mittel zum Fördern und/ oder zum Steuern von Fluid zugeordnet. So ist dem Stator des Mittels 210B zum Erzeugen eines steuerbar veränderlichen Magnetfeldes das Schaltelement 330 zugeordnet, welches als Drehschieber ausgebildet ist. Durch den Drehschieber können unterschiedliche Bauräume und unterschiedliche Anforderungen mit jeweils verschiedene Schaltungsstrategien realisiert werden. So kann Fluid umgeleitet und unterschiedliche Anschlüsse und Schaltmodi können miteinander kombiniert werden.

Dem Stator der Mittel 210A, 210C zum Erzeugen eines steuerbar veränderlichen Magnetfeldes ist jeweils ein Laufrad 340 (nicht gezeigt) zugeordnet. Das Laufrad 340 ist als Impeller ausgebildet und wird direkt in einen Fluidkreislauf innerhalb des zweiten Gehäuseabschnitts 300 integriert. Durch den Stator wird über die magnetische Kopplung zum Rotor ein Drehmoment erzeugt, welches zu einer Rotation des Impellers führt. Somit wird der Impeller als Pumpe des jeweils zugeordneten Fluidkreislaufs nutzbar.

Die Rotoren, welche den Mittel 310A, 310B, 310C welche durch das Magnetfeld bewegbar ausgebildet sind, zugeordnet sind, sind jeweils in die zylinderförmige Ausbuchtung 152 zum Aufnehmen eines im zweiten Gehäuseabschnitt 300 angeordneten Rotors eingebracht. Mit anderen Worten wird durch die zylindrische Ausbuchtung 152 sowohl die genaue Anordnung eines Stators im ersten Gehäuseabschnitt 200 als auch die genaue Anordnung eines Rotors im zweiten Gehäuseabschnitt 300 ermöglicht, wodurch eine exakte Zuordnung von Rotor und Stator untereinander realisiert wird. Die zylindrische Ausbuchtung 152 erfüllt also die Doppelfunktion der Zuordnung von Rotor und Stator einerseits und die fluiddichte Trennung zwischen erstem Gehäuseabschnitt 200 und zweitem Gehäuseabschnitt 300, welcher als hydraulische Entkopplung bezeichnet werden kann.

Die Kombination aus Mittel 210A, 210B, 210C zum Erzeugen eines steuerbar veränderlichen Magnetfelds in Form eines Stators, welches im trockenen ersten Gehäuseabschnitt 200 angeordnet ist, das jeweils zugeordnete Mittel 310A, 310B, 310C, welches durch das erzeugte Magnetfeld bewegbar und im nassen zweiten Gehäuseabschnitt 300 angeordnet ist, und über die Konturwand 152 hinweg durch eine magnetische Kopplung betreibbar ist, beschreiben jeweils ein Fluidhandhabungselement 110A, 110B, 110C.

Das Mittel 2100 zum Erzeugen eines steuerbar veränderlichen Magnetfelds in Form eines Schrittmotors ist dem trockenen ersten Gehäuseabschnitt 200 zugeordnet. Zusätzlich ist ein Mittel, welches durch das erzeugte Magnetfeld bewegbar ist, zugeordnet, welches in Form eines Expansionsventils 370 ausgebildet ist. Im Unterschied zu den bereits beschriebenen Fluidhandhabungselementen 110A, 110B, 110C existiert keine durchgehende fluidundurchlässige Konturwand zwischen dem Mittel 210D zum Erzeugen eines steuerbar veränderlichen Magnetfelds und dem Mittel, welches durch das erzeugte Magnetfeld bewegbar ist. Letzteres ist in das Gehäuse des Expansionsventils 370 integriert und das Expansionsventil 370 ist lediglich parallel zu den anderen Fluidhandhabungselementen 110A, 110B, 110C am Gehäuse der Vorrichtung angeordnet, wobei der Schrittmotor in den trockenen Bereich des ersten Gehäuseabschnitts 200 integriert ist. Zur Stabilisierung des Expansionsventils 370 in der Vorrichtung 100 sind insgesamt vier seitliche Haltemittel 304 angeordnet.

Insgesamt verfügt die Vorrichtung 100 in der vorliegenden Ausführungsform über ein erstes Fluidhandhabungselement 110A, welches als Fluidpumpe ausgebildet ist. Zusätzlich umfasst die Vorrichtung 100 ein zweites Fluidhandhabungselement 110C, welches ebenfalls eine Fluidpumpe aufweist. Dadurch können zwei voneinander getrennte Fluidkreisläufe betrieben werden, bzw. lässt sich damit das Fluid zweier getrennter Fluidkreisläufe befördern. Zusätzlich weist die Vorrichtung 100 ein drittes Fluidhandhabungselement 110B auf, welches ein Fluidventil oder ein Schaltelement 330 umfasst. Das Fluidventil ist mit einem Drehschieber ausgebildet und der Drehschieber macht die Vorrichtung 100 an verschiedene Fahrzeuge anpassbar. Unterschiedliche Bauräume und unterschiedliche Anforderungen des Fahrzeugs können beispielsweise durch Umleiten des Fluids realisiert werden. Durch Umschalten des Drehschiebers kann von parallelen Fluidkreisläufen auf serielle Fluidkreisläufe umgeschaltet werden. Das Expansionsventil 370, ist zum Betreiben eines Wärmetauschers 380 ausgebildet. Der Wärmetauscher 380 ist seitlich mittels eines Flanschs 382 an den zweiten Gehäuseabschnitt 300 fixiert.

Alle der Fluidhandhabungselemente 110A, 110B, 110C sind derart an der Vorrichtung 100 angeordnet, dass die Rotorachsen (nicht gezeigt) der Fluidhandhabungselemente 110A, 110B, 110C parallel zueinander angeordnet sind. Dies vereinfacht die Fertigung und die Montage der gesamten Vorrichtung 100 erheblich, wobei zusätzlich einzelne Baugruppen einfach getestet und ausgetauscht werden können.

An den zweiten Gehäuseabschnitt 300 sind mehrere Anschlüsse 320A, 320B, 320C, 320D zum Ein- und Ausströmen von Fluid angeordnet. Die Anschlüsse dienen als Kundenschnittstelle und können je nach Anforderung in Bezug auf den Schlauchdurchmesser und die entsprechenden Positionen variiert werden. Die vorliegende Ausführungsform umfasst insgesamt vier Anschlüsse 320A, 320B, 320C, 320D, welche Fluid seitlich aus dem zweiten Gehäuseabschnitt 300 ausleiten bzw. Fluid seitlich in den zweiten Gehäuseabschnitt 300 einleiten. Ein Anschluss 320D dient der Verbindung mit einem Wärmetauscher 380.

Die Vorrichtung 100 umfasst die elektrische Steuereinheit 220, welche ebenfalls im trockenen ersten Gehäuseabschnitt 200 angeordnet ist. Die elektrische Steuereinheit 220 ist als flächiger Körper ausgebildet wie es beispielsweise bei Steuerplatinen oder dergleichen üblich ist. Die Steuereinheit 220 ist oberhalb der als Statoren ausgebildeten Mittel zum Erzeugen eines steuerbar veränderlichen Magnetfelds 210A, 210B, 210C, 2100 angeordnet. Die elektrische Steuereinheit 220 ist zur Steuerung der Vorrichtung 100 notwendig. Beispielsweise könnte die Steuereinheit 220 auch zwischen den einzelnen Statoren innerhalb des ersten Gehäuseabschnitts 200, jedoch unmittelbar angrenzend an der fluidisch undurchlässigen Konturwand 150 angeordnet werden. Dies wäre vorteilhaft da die elektrische Steuereinheit 220 zusätzlich gekühlt werden könnte, ohne ein Risiko des unmittelbaren Kontakts mit dem Fluid einzugehen. Zusätzlich könnte mit der Verlustwärme geheizt werden, welche im Betrieb der elektrischen Steuereinheit 220 entsteht. Alternativ könnte die elektrische Steuereinheit 220 auch außerhalb der Vorrichtung 100 angeordnet werden. Dies bietet sich beispielsweise für externe kundenspezifische Steuereinheiten an, welche über eine Schnittstelle - beispielsweise über den Steckeranschluss 204 - mit der Vorrichtung 100 verbunden werden.

Der erste Gehäuseabschnitt 200 umfasst ein abnehmbares erstes Abdeckelement 202. Dieses erste Abdeckelement 202 vereinfacht den Zugang zu gesamten Elektronik, welche innerhalb des ersten Gehäuseabschnitts 200 angeordnet ist. Somit kann zu Reparaturzwecken, Inspektionen oder auch zu Testzwecken direkt auf den Trockenbereich und die Bestandteile der Elektronik in der Vorrichtung 100 zugegriffen werden. Beispielsweise kann das Abdeckelement 202 mittels einer Schraubverbindung mit dem zweiten Gehäuseabschnitt 300 verbunden werden. Alternativ ist jedoch ebenso eine Klemm- oder Rastverbindung denkbar. Zusätzlich umfasst das erste Abdeckelement 202 einen Steckeranschluss 204, welcher als zusätzliche Schnittstelle zum Kunden eingesetzt werden kann. Beispielsweise kann die Vorrichtung 100 mittels einer kundeneigenen Steuereinheit verbunden und betrieben werden.

Entsprechend verfügt der zweite Gehäuseabschnitt 300 auch über ein abnehmbares zweites Abdeckelement 302. Auch dieses zweite Abdeckelement 302 kann zu Reparaturzwecken entfernt werden, wodurch direkt auf alle nasslaufenden Bestandteile der Vorrichtung 100 zugegriffen werden kann. Beispielsweise können auch defekte Bestandteile gewechselt werden, ohne dass direkt die gesamte Vorrichtung 100 aus dem betreffenden Fahrzeug ausgebaut werden muss. Das zweite Abdeckelement 302 verfügt über insgesamt drei Lager 303, welche zur Aufnahme des jeweiligen Mittels 310A, 310B, 310C welches durch das erzeugte Magnetfeld bewegbar ist, ausgebildet sind. Beispielsweise kann der untere Abschnitt der Zentralachse 361 (nicht gezeigt) des Stellelements 366 (nicht gezeigt) von dem zugeordneten Lager 303 im zweiten Abdeckelement 302 aufgenommen werden.

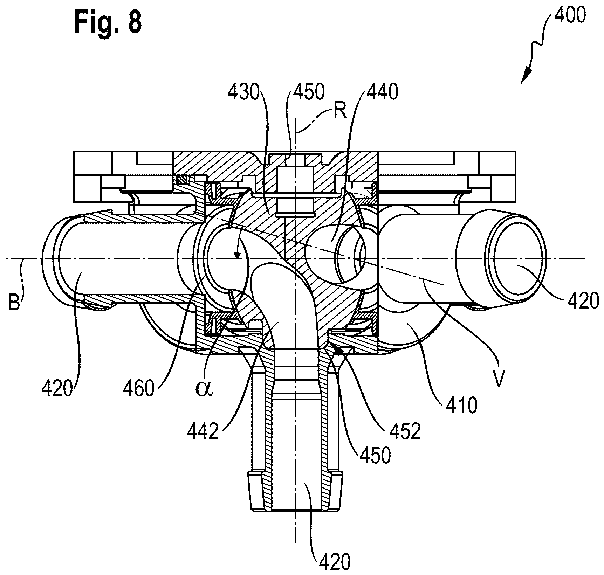

Die Fig. 8 zeigt eine Schnittdarstellung einer erfindungsgemäßen Ventileinrichtung 400. Die Ventileinrichtung 400 ist Teil der Vorrichtung 100 (nicht gezeigt) zur Handhabung von Fluid eines zumindest teilweise elektrisch angetriebenen Fahrzeugs. Die Ventileinrichtung 400 umfasst ein Ventilgehäuse 410 mit zumindest zwei radial angeordneten Anschlussöffnungen 420 - in Fig. 8 sind drei Anschlussöffnungen 420 gezeigt. Von den drei Anschlussöffnungen 420 könnte auch eine Anschlussöffnung 420 je nach Funktion blind ausgebildet sein. Zusätzlich befindet sich eine nach unten ragende axial angeordnete Anschlussöffnung 420 zum Ein- und/oder Ausströmen von Fluid. Ein Ventilkörper 430 befindet sich innerhalb des Ventilgehäuses 410 und ist um eine axiale Rotationsachse R drehbar ausgebildet. Der Ventilkörper 430 hat einen ersten bogenförmig ausgebildeten Verbindungskanal 440 und einen zweiten bogenförmig ausgebildeten Verbindungskanal 442. Der erste bogenförmig ausgebildete Verbindungskanal 440 verbindet zwei radial angeordnete Anschlussöffnungen 420. Der zweite bogenförmig ausgebildete Verbindungskanal 442 dient dem Verbinden einer radial angeordneten Anschlussöffnung 420 mit der axial angeordneten Anschlussöffnung 420. Die radial angeordneten Anschlussöffnungen 420 bilden eine Basisebene B, welche orthogonal zur axialen Rotationsachse R ausgebildet ist.

Der erste bogenförmige Verbindungskanal 440 definiert eine erste Verbindungskanalebene V. Die erste Verbindungskanalebene V ist gegenüber der Basisebene B geneigt. Die beiden Ebenen schließen miteinander einen ersten Neigungswinkel α von etwa 5° ein. Dadurch ist der erste bogenförmig ausgebildete Verbindungskanal 440 räumlich geneigt ausgebildet, wobei die Ein- und Austrittsöffnungen des Verbindungskanals 440 nach unten orientiert sind.

Der Ventilkörper 430 ist kugelartig ausgebildet und umfasst eine Lagerung 450 oberhalb des Ventilkörpers 430 und eine Lagerung 450 unterhalb des Ventilkörpers 430. Die obere Lagerung 450 ist unmittelbar einer Öffnung im Gehäusedeckel 412 zugeordnet. Die untere Lagerung 450 umfasst einen Lagerring 452, wodurch die Stabilität des Ventilkörpers 430 im Ventilgehäuse 410 sichergestellt wird. Am Übergang zwischen dem Ventilkörper 430 zu jeder radialen Anschlussöffnung 420 befindet sich ein Dichtungselement 460.

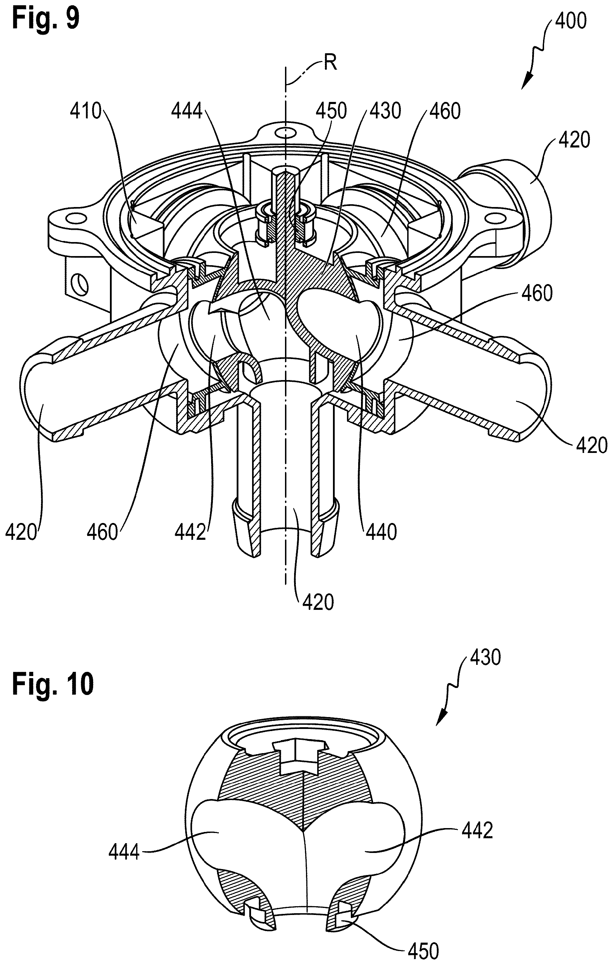

Die Fig. 9 zeigt eine weitere Schnittdarstellung einer erfindungsgemäßen Ventileinrichtung 400. Die identischen Merkmale sind mit identischen Bezugsziffern bezeichnet. Auf eine erneute Beschreibung wird verzichtet.

Zusätzlich weist der zweite bogenförmig ausgebildete Verbindungskanal 442 zum Verbinden einer radial angeordneten Anschlussöffnung 420 mit der axial nach unten angeordneten Anschlussöffnung 420 einen zusätzlichen Verbindungskanal 444 zum Verbinden einer zweiten radial angeordneten Anschlussöffnung 420 mit der axial angeordneten Anschlussöffnung 420 auf. Die zweite radial angeordnete Anschlussöffnung 420 ist in der dargestellten Schaltposition des Ventilkörpers 430 durch das Ventilgehäuse 410 verschlossen.

Die Fig. 10 zeigt eine Schnittdarstellung eines Ventilkörpers 430. Der dargestellte Ventilkörper 430 entspricht dem Ventilkörper aus der vorausgehenden Figur 9. Der Ventilkörper 430 umfasst den zweiten bogenförmig ausgebildete Verbindungskanal 442 zum Verbinden einer radial angeordneten Anschlussöffnung 420 (nicht gezeigt) mit der axial nach unten angeordneten Anschlussöffnung 420 (nicht gezeigt). Zusätzlich umfasst der Ventilkörper 430 einen zusätzlichen Verbindungskanal 444 zum Verbinden einer radial angeordneten Anschlussöffnung 420 mit der axial angeordneten Anschlussöffnung 420. An der Unterseite des Ventilkörpers 430 ist der Lagerring 452 als Bestandteil des Lagers 450 angeordnet.

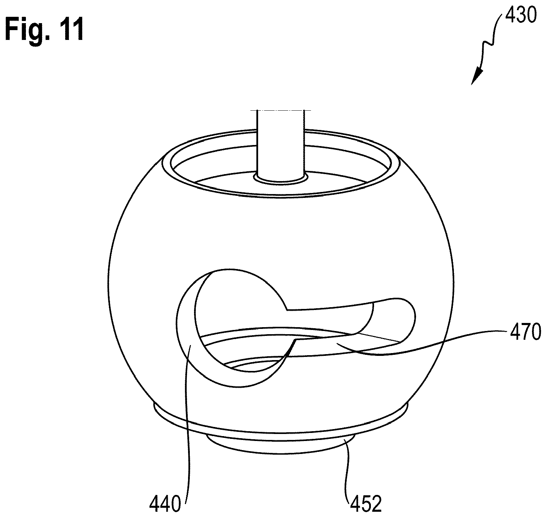

Die Fig. 11 zeigt eine perspektivische Darstellung eines Ventilkörpers 430 nach einer weiteren Ausführungsform. Der Ventilkörper 430 umfasst eine Kontur 470, welche dem Eintritt und/ oder dem Austritt eines Verbindungskanals 440 zugeordnet ist. Die Kontur ist entlang ihrer Längsausdehnung orthogonal zur Rotationsachse R ausgebildet. An der Unterseite des Ventilkörpers 430 befindet sich der Lagerring 452.

Sämtliche in Verbindung mit einzelnen Ausführungsformen der Erfindung erläuterten und gezeigten Merkmale können in unterschiedlichen Kombinationen in dem erfindungsgemäßen Gegenstand vorgesehen sein, um gleichzeitig deren vorteilhafte Wirkung zu realisieren. Der Schutzbereich der vorliegenden Erfindung ist durch die Ansprüche gegeben und wird durch die in der Beschreibung erläuterten oder in den Figuren gezeigten Merkmale nicht beschränkt.

## Patentansprüche

1. Vorrichtung (100) zur Handhabung von Fluid eines zumindest teilweise elektrisch angetriebenen Fahrzeugs, mit:
einer Ventileinrichtung (400), umfassend
ein Ventilgehäuse (410), wobei das Ventilgehäuse (410) zumindest zwei radial angeordnete Anschlussöffnungen (420) und zumindest eine axial angeordnete Anschlussöffnung (420) zum Ein- und/oder Ausströmen von Fluid aufweist,
ein Ventilkörper (430), welcher innerhalb des Ventilgehäuses (410) angeordnet und um eine axiale Rotationsachse R drehbar ausgebildet ist, wobei
der Ventilkörper (430) einen ersten bogenförmig ausgebildeten Verbindungskanal (440) zum Verbinden von zwei radial angeordneten Anschlussöffnungen (420) und einen zweiten bogenförmig ausgebildeten Verbindungskanal (442) zum Verbinden einer radial angeordneten Anschlussöffnung (420) mit einer axial angeordneten Anschlussöffnung (420) aufweist,
wobei die zumindest zwei radial angeordneten Anschlussöffnungen (420) eine Basisebene B definieren, welche orthogonal zur axialen Rotationsachse R ausgebildet ist, und der erste bogenförmige Verbindungskanal (440) eine erste Verbindungskanalebene V definiert,
**dadurch gekennzeichnet, dass** die erste Verbindungskanalebene V gegenüber der Basisebene B einen ersten Neigungswinkel α aufweist, welcher größer 0° ist.

2. Vorrichtung (100) nach Anspruch 1,
wobei der erste Neigungswinkel α kleiner 45°, insbesondere kleiner 30°, insbesondere kleiner 15°, insbesondere kleiner 5° ist.

3. Vorrichtung (100) nach Anspruch 1 oder 2, wobei
eine radial angeordnete Anschlussöffnung (420) und eine axial angeordnete Anschlussöffnung (420) eine Axialebene A definieren und der zweite bogenförmig ausgebildete Verbindungskanal (442) eine zweite Verbindungskanalebene W definiert, wobei die Axialebene A gegenüber der zweiten Verbindungskanalebene W einen zweiten Neigungswinkel β aufweist, welcher größer 0° ist.

4. Vorrichtung (100) nach Anspruch 3, wobei
wobei der zweite Neigungswinkel β kleiner 45°, insbesondere kleiner 30°, insbesondere kleiner 15°, insbesondere kleiner 5° ist.

5. Vorrichtung (100) nach einem der vorangehenden Ansprüche, wobei
der zweite bogenförmig ausgebildete Verbindungskanal (442) zum Verbinden einer radial angeordneten Anschlussöffnung (440) mit einer axial angeordneten Anschlussöffnung (440) einen zusätzlichen Verbindungskanal (444) zum Verbinden einer zweiten radial angeordneten Anschlussöffnung (420) mit der axial angeordneten Anschlussöffnung (420) aufweist.

6. Vorrichtung (100) nach einem der vorangehenden Ansprüche, wobei
der Ventilkörper (430) kugelartig ausgebildet ist und eine Lagerung (450) aufweist, welche außerhalb des Ventilkörpers (430) angeordnet ist.

7. Vorrichtung (100) nach Anspruch 6, wobei
die Lagerung (450) einen Lagerring (452) umfasst, welcher der axialen Anschlussöffnung (420) zugeordnet ist.

8. Vorrichtung (100) nach einem der vorangehenden Ansprüche, wobei zumindest einer Anschlussöffnung (420) des Ventilgehäuses (410) ein Dichtungselement (460) zugeordnet ist, wobei ein Innendurchmesser eines korrespondierenden Verbindungskanals im Wesentlichen mit dem Innendurchmesser des Dichtungselements (460) identisch ist.

9. Vorrichtung (100) nach Anspruch 8, wobei
das Dichtungselement (460) Teflon umfasst.

10. Vorrichtung (100) nach einem der vorangehenden Ansprüche, wobei
der Ventilkörper (430) zumindest eine Kontur (470) umfasst, welche dem Eintritt und/ oder dem Austritt des ersten Verbindungskanals (440) oder des zweiten Verbindungskanals (442) zugeordnet ist.

11. Vorrichtung (100) nach einem der vorangehenden Ansprüche, wobei die Vorrichtung (100) ein Vorrichtungsgehäuse mit einem ersten Gehäuseabschnitt (200) und einen zweiten Gehäuseabschnitt (300) aufweist, wobei der erste Gehäuseabschnitt (200) und der zweite Gehäuseabschnitt (300) durch eine fluidisch undurchlässige Konturwand (150) aneinander angrenzend ausgebildet sind,
wobei die Konturwand (150) eine zum ersten Gehäuseabschnitt (200) orientierte Seite und eine zum zweiten Gehäuseabschnitt (300) orientierte Seite aufweist,
zumindest einem Fluidhandhabungselement (110B),
wobei das Fluidhandhabungselement (110B) ein Mittel (210B) zum Erzeugen eines steuerbar veränderlichen Magnetfelds, welches in dem ersten Gehäuseabschnitt (200) angeordnet ist, und ein Mittel (310B) in Form der Ventileinrichtung (400), welches durch das erzeugte Magnetfeld bewegbar ist und in dem zweiten Gehäuseabschnitt (300) angeordnet ist, umfasst.

12. Vorrichtung (100) nach Anspruch 11, wobei
wobei das Mittel (210B) zum Erzeugen eines steuerbar veränderlichen Magnetfelds einen Stator und das durch das erzeugte Magnetfeld bewegbare Mittel (310B) in Form der Ventileinrichtung (400) einen Rotor aufweist.

13. Vorrichtung (100) nach Anspruch 11 oder 12, wobei
die Konturwand (150) eine zylinderförmige Ausbuchtung (152) aufweist, welche einen Innenraum eines im ersten Gehäuseabschnitt (200) angeordneten Stators zumindest im Wesentlichen füllt.

14. Vorrichtung (100) nach Anspruch 13, wobei
die zylinderförmige Ausbuchtung (152) zum Aufnehmen eines im zweiten Gehäuseabschnitt (300) angeordneten Rotors ausgebildet ist.

15. Vorrichtung (100) nach einem der Ansprüche 11 bis 14, wobei
die Vorrichtung (100) ein zweites Fluidhandhabungselement (110A, 110C) umfasst, welches eine Fluidpumpe aufweist.

16. Vorrichtung (100) nach Anspruch 15, wobei
die Rotorachsen (312A, 312B, 312C) der Fluidhandhabungselemente (110A, 110B, 110C) parallel zueinander angeordnet sind.

## Claims

1. A device (100) for handling fluid of an at least partially electrically powered vehicle, comprising:
a valve assembly (400) comprising
a valve housing (410), the valve housing (410) having at least two radially disposed connection openings (420) and at least one axially disposed connection opening (420) for fluid to flow in and/or out,
a valve body (430), which is arranged inside the valve housing (410) and is designed to be rotatable about an axial rotation axis R, wherein
the valve body (430) has a first arc-shaped connecting channel (440) for connecting two radially arranged connection openings (420) and a second arc-shaped connecting channel (442) for connecting a radially arranged connection opening (420) to an axially arranged connection opening (420),
wherein the at least two radially arranged connection openings (420) define a base plane B which is formed orthogonally to the axial rotation axis R, and the first arc-shaped connecting channel (440) defines a first connecting channel plane V,
**characterized in that** the first connecting channel plane V has a first angle of inclination □ relative to the base plane B, which is greater than 0°.

2. The device (100) according to claim 1, wherein the first angle of inclination □ is smaller than 45°, in particular smaller than 30°, in particular smaller than 15°, in particular smaller than 5°.

3. The device (100) according to claim 1 or 2, wherein a radially arranged connection opening (420) and an axially arranged connection opening (420) define an axial plane A, and the second arc-shaped connecting channel (442) defines a second connecting channel plane W,
wherein the axial plane A has a second angle of inclination □ relative to the second connecting channel plane W, which is greater than 0°.

4. The device (100) of claim 3, wherein the second angle of inclination D is smaller than 45°, in particular smaller than 30°, in particular smaller than 15°, in particular smaller than 5°.

5. Device (100) according to any one of the preceding claims, wherein the second arc-shaped connecting channel (442) for connecting a radially arranged connection opening (440) to an axially arranged connection opening (440) comprises an additional connecting channel (444) for connecting a second radially arranged connection opening (420) to the axially arranged connection opening (420).

6. Device (100) according to any one of the preceding claims, wherein the valve body (430) is spherical and comprises a bearing (450) arranged outside the valve body (430).

7. The device (100) according to claim 6, wherein the bearing (450) comprises a bearing ring (452) associated with the axial connection opening (420).

8. Device (100) according to any one of the preceding claims, wherein a sealing element (460) is associated with at least one connection opening (420) of the valve housing (410), wherein an inner diameter of a corresponding connecting channel is substantially identical to the inner diameter of the sealing element (460).

9. The device (100) according to claim 8, wherein the sealing element (460) comprises Teflon.

10. Device (100) according to any one of the preceding claims, wherein the valve body (430) comprises at least a shape (470) associated with the inlet and/or the outlet of the first connecting channel (440) or the second connecting channel (442).

11. Device (100) according to any one of the preceding claims, wherein
the device (100) comprises a device housing with a first housing section (200) and a second housing section (300), the first housing section (200) and the second housing section (300) being formed adjacent to one another by a fluidically impermeable contour wall (150)
said contour wall (150) comprises a side oriented toward said first housing section (200) and a side oriented toward said second housing section (300),
at least one fluid handling element (110B), wherein
said fluid handling element (1 10B) comprises means (21 OB) for generating a controllably variable magnetic field disposed in said first housing section (200), and means (310B) in the form of said valve assembly (400) which is movable by said generated magnetic field and is disposed in said second housing section (300).

12. The device (100) of claim 11, wherein the means (210B) for generating a controllably variable magnetic field comprises a stator and the means (310B) which is movable by the generated magnetic field in the form of the valve assembly (400) comprises a rotor.

13. The device (100) of claim 11 or 12, wherein the contour wall (150) comprises a cylindrical bulge (152) that at least substantially fills an interior of a stator disposed in the first housing section (200).

14. The device (100) of claim 13, wherein the cylindrical bulge (152) is configured to receive a rotor disposed in the second housing section (300).

15. The device (100) according to any one of claims 11 to 14, wherein the device (100) comprises a second fluid handling element (110A, 110C) comprising a fluid pump.

16. The device (100) according to claim 15, wherein the rotor axes (312A, 312B, 312C) of the fluid handling elements (110A, 110B, 110C) are arranged parallel to each other.

## Revendications

1. Dispositif (100) de manipulation de fluide d'un véhicule propulsé au moins partiellement
électriquement, comprenant :
un dispositif à soupape (400), comprenant
un boîtier de soupape (410), le boîtier de soupape (410) présentant au moins deux ouvertures de raccordement (420) disposées radialement et au moins une ouverture de raccordement (420) disposée axialement pour l'entrée et/ou la sortie de fluide,
un corps de soupape (430), qui est disposé à l'intérieur du boîtier de soupape (410) et qui est conçu de manière à pouvoir tourner autour d'un axe de rotation axial R, dans lequel
le corps de soupape (430) présente un premier canal de raccordement (440) en forme d'arc pour relier deux ouvertures de raccordement (420) disposées radialement et un second canal de raccordement (442) en forme d'arc pour relier une ouverture de raccordement (420) disposée radialement à une ouverture de raccordement (420) disposée axialement,
dans lequel les au moins deux ouvertures de raccordement (420) disposées radialement définissent un plan de base B qui est formé orthogonalement à l'axe de rotation axial R, et le premier canal de raccordement (440) en forme d'arc définit un premier plan de canal de raccordement V,
**caractérisé en ce que** le premier plan de canal de liaison V présente, par rapport au plan de base B, un premier angle d'inclinaison α qui est supérieur à 0°.

2. Dispositif (100) selon la revendication 1, dans lequel le premier angle d'inclinaison α est inférieur à 45°, notamment inférieur à 30°, notamment inférieur à 15°, notamment inférieur à 5°.

3. Dispositif (100) selon la revendication 1 ou 2, dans lequel une ouverture de raccordement (420) disposée radialement et une ouverture de raccordement (420) disposée axialement définissent un plan axial A, et le second canal de raccordement (442) en forme d'arc définit un second plan de canal de raccordement W, dans lequel le plan axial A présente un second angle d'inclinaison β par rapport au second plan de canal de raccordement W, qui est supérieur à 0°.

4. Dispositif (100) selon la revendication 3, dans lequel le second angle d'inclinaison β est inférieur à 45°, notamment inférieur à 30°, notamment inférieur à 15°, notamment inférieur à 5°.

5. Dispositif (100) selon l'une des revendications précédentes, dans lequel le second canal de raccordement (442) réalisé en forme d'arc pour relier une ouverture de raccordement (440) disposée radialement à une ouverture de raccordement (440) disposée axialement, présente un canal de raccordement supplémentaire (444) pour relier une seconde ouverture de raccordement (420) disposée radialement à l'ouverture de raccordement (420) disposée axialement.

6. Dispositif (100) selon l'une des revendications précédentes, dans lequel le corps de soupape (430) est de forme sphérique et comporte un palier (450) qui est disposé à l'extérieur du corps de soupape (430).

7. Dispositif (100) selon la revendication 6, dans lequel le palier (450) comprend une bague de roulement (452) associée à l'ouverture de raccordement axial (420).

8. Dispositif (100) selon l'une des revendications précédentes, dans lequel un élément d'étanchéité (460) est associé à au moins une ouverture de raccordement (420) du boîtier de soupape (410), dans lequel un diamètre intérieur d'un canal de raccordement correspondant est sensiblement identique au diamètre intérieur de l'élément d'étanchéité (460).

9. Dispositif (100) selon la revendication 8, dans lequel l'élément d'étanchéité (460) contient du téflon.

10. Dispositif (100) selon l'une des revendications précédentes, dans lequel le corps de soupape (430) comprend au moins un contour (470) associé à l'entrée et/ou à la sortie du premier canal de raccordement (440) ou du second canal de raccordement (442).

11. Dispositif (100) selon l'une des revendications précédentes, dans lequel
le dispositif (100) comprend un boîtier de dispositif avec une première section de boîtier (200) et une seconde section de boîtier (300), la première section de boîtier (200) et la seconde section de boîtier (300) étant formées de manière adjacente l'une à l'autre par une paroi de contour (150) imperméable aux fluides,
la paroi de contour (150) présente un côté orienté vers la première section de boîtier (200) et un côté orienté vers la seconde section de boîtier (300),
au moins un élément de manipulation de fluide (1 10B), dans lequel
l'élément de manipulation de fluide (110B) comprend un moyen (21 OB) pour générer un champ magnétique variable de manière contrôlable, qui est disposé dans la première partie de boîtier (200), et un moyen (310B) sous la forme du dispositif à soupape (400), qui est déplaçable par le champ magnétique généré et qui est disposé dans la seconde partie de boîtier (300).

12. Dispositif (100) selon la revendication 11, dans lequel le moyen (210B) pour générer un champ magnétique variable de manière contrôlable présente un stator et le moyen (310B) sous la forme du dispositif à soupape (400), qui est déplaçable par le champ magnétique généré, présente un rotor.

13. Dispositif (100) selon la revendication 11 ou 12, dans lequel la paroi de contour (150) présente un renflement (152) de forme cylindrique qui remplit au moins sensiblement un espace intérieur d'un stator disposé dans la première section de boîtier (200).

14. Dispositif (100) selon la revendication 13, dans lequel le renflement (152) de forme cylindrique est conçu pour recevoir un rotor disposé dans la seconde section de boîtier (300).

15. Dispositif (100) selon l'une des revendications 11 à 14, dans lequel le dispositif (100) comprend un second élément de manipulation de fluide (1 10A, 1 10C) comprenant une pompe à fluide.

16. Dispositif (100) selon la revendication 15, dans lequel les axes de rotor (312A, 312B, 312C) des éléments de manipulation de fluide (110A, 110B, 110C) sont parallèles entre eux.
